# EUROPEAN PATENT SPECIFICATION

(11) **EP 3 945 259 B1**
(45) Date of publication and mention of the grant of the patent: **27.11.2024**
(21) Application number: 21187902.8
(22) Date of filing: 27.07.2021
(51) Int. Cl.: F24F 8/80, F24F 13/065, F24F 8/108, F24F 13/10, F24F 13/20

(54) **PORTABLE AIR PURIFIER**
TRAGBARER LUFTREINIGER
PURIFICATEUR D'AIR PORTABLE

(30) Priority: 28.07.2020 KR 20200093970; 08.12.2020 KR 20200170567
(43) Date of publication of application: 02.02.2022
(73) Proprietor: LG Electronics Inc., Seoul 07336 (KR)
(72) Inventor: AN, Seong Woo, 08592 Seoul (KR); KIM, Dongeun, 08592 Seoul (KR); OH, Min Kyu, 08592 Seoul (KR); LEE, Deukwon, 08592 Seoul (KR); KIM, Daewoong, 08592 Seoul (KR); KWON, Boan, 08592 Seoul (KR)
(74) Representative: Vossius & Partner Patentanwälte Rechtsanwälte mbB

(56) References cited:
- WO-A1-2019/004635
- WO-A1-2019/194637
- CN-A- 105 299 862
- DE-A1- 102015 115 964
- JP-A- 2019 504 278
- KR-A- 20170 040 161
- KR-A- 20190 106 682
- KR-A- 20190 114 472
- KR-A- 20190 117 068
- US-A1- 2021 025 601

## Description

### TECHNICAL FIELD

Disclosed herein is a portable air purifier, and specifically, a portable air purifier in which a discharge part for discharging air upward can be installed in a rotatable manner.

### BACKGROUND

Air purifiers are devices that are widely used in our daily lives. The devices can filter physical particles such as dust, fine dust, ultra fine dust and the like, chemical substances such as odorant particles, harmful gases and the like, and microorganisms such as germs, viruses and the like, to purify air.

People cannot live without air purifiers in an industrial society since more and more people are greatly affected by fine dust and suffer from allergies. Accordingly, there is a growing demand for the devices.

Ordinarily, a large-sixed air purifier is used in a house that is 100 square meters or greater. The air purifier can be provided with a filter for physical particles such as dust and the like, a filter for chemical substances such as gas and the like, and a filter for microorganisms such as germs, viruses and the like. That is, such a large-sized air purifier capable of accommodating various types of filters can be used in a large space.

However, the large-sized air purifier is rarely used in a small space such as a studio apartment, a space in a vehicle and the like considering space availability, mobility and energy efficiency. Additionally, a user who moves from place to place usually uses a small-sized air purifier. Under the circumstances, there is a growing need for a portable air purifier that is easy to carry.

The portable air purifiers need to be small and lightweight enough for users to carry such that the users can easily carry and use the portable air purifiers anywhere. That is, the portable air purifiers are useful for people who often go out and move from place to place instead of staying in a place such as a house.

In a prior art document (KR Patent Publication No. 10-2020-0037187), air is suctioned into a rear surface of a portable air purifier and is discharged from a front surface of the portable air purifier.

A portable air purifier has a limited size such that a user carries the portable air purifier readily. Accordingly, the portable air purifier is not provided with an additional discharge part that can rotate to adjust a discharge direction of air.

A background art in relation to the subject matter of the present disclosure is disclosed in KR Patent Publication No. 10-2020-0037187 (titled Portable Air Caring Apparatus and published on April 08, 2020). WO 2019/194637 A1 relates to a fan assembly having a swirl fan and an air conditioner including the same.

### SUMMARY

### Technical Problem

The present invention is directed to a portable air purifier in which a discharge part for guiding discharge of air is installed in a rotatable manner. The present invention is also directed to a portable air purifier in which a discharge part rotates within predetermined angles, thereby preventing damage to an electric wire connected to the discharge part.

Aspects according to the present invention are not limited to the above ones, and other aspects and advantages that are not mentioned above can be clearly understood from the following description and can be more clearly understood from the embodiments set forth herein. Additionally, the aspects and advantages in the present invention can be realized via means and combinations thereof that are described in the appended claims.

### Technical Solution

The invention is defined by the independent claims. Further embodiments of the invention are defined by the dependent claims.

In a portable air purifier according to the present invention, a discharge part may be installed on an upper side of a housing in a way that the discharge part is supported by a rotation supporter in a rotatable manner. Specifically, the discharge part may be disposed at a ball joint included in the rotation supporter and may rotate around the ball joint, thereby readily adjusting a discharge direction of air. In the portable air purifier according to the present invention, a rotation angle of the discharge part may be limited within the predetermined angles by a rotation guide. Specifically, a guide projection protruding outside the ball joint may be held in a guide groove formed inside the discharge part, and the discharge may rotate within the predetermined angles, thereby preventing an electric wire connected to the discharge part from being broken or damaged.

A portable air purifier according to the invention includes a housing provided with an entrance part configured to suction air, provided therein with a filter part and a fan module and forming an air flow path in an up-down direction, a discharge part disposed at an outlet of the housing and configured to guide a discharge direction of air, a rotation supporter which is connected to the housing, movement of which is restricted and which supports the discharge part in a rotatable manner, and a rotation guide disposed respectively at the discharge part and the rotation supporter and configured to guide rotation of the discharge part to allow the discharge part to rotate within predetermined angles.

The rotation supporter includes a core member disposed on a lower side of the discharge part and extended from a center of the outlet to the discharge part, a core supporter which is extended outside the core member, which is fixed to an inside of the housing and movement of which is restricted together with movement of the core member, and a ball joint a lower side of which is coupled to the core member and movement of which is restricted, and an upper side of which is inserted into the discharge part and supports the discharge part in a rotatable manner.

The core member may have an outside that is a curved surface and have a transverse cross section that is gradually reduced from a lower side connected to the core supporter toward the ball joint.

The core member may have a circular cone shape and have a transverse cross section that is gradually reduced further toward an upper side.

The rotation guide includes a guide projection connected to the ball joint or integrated with the ball joint and protruding outside the ball joint, and a guide groove forming a concave groove inside the discharge part facing the guide projection.

The guide projection is inserted into the guide groove, and a rotation of the discharge part at a predetermined angle or greater may be restricted since the guide projection is held inside the guide groove.

The discharge part may include a discharge body part disposed at the outlet of the housing and configured to guide a discharge direction of air, a first supporter connected to the discharge body part or integrated with the discharge body part and provided with a first curved surface groove formed into a concave groove, and a second supporter coupled to the first supporter and provided therein with a second curved surface groove connected to the first curved surface groove.

The ball joint may be disposed in an inner space formed by the first curved surface groove and the second curved surface groove, and may support the first supporter and the second supporter in a rotatable manner.

The guide groove may be disposed at at least one of the first supporter and the second supporter facing the ball joint.

The portable air purifier may further include a position informing part held in the discharge part and providing a sense of manipulation when the discharge part is at a predetermined position.

The position informing part may include an informing projection provided with a moving projection that is pressed against an outside of the ball joint by an elastic force, wherein when the discharge part is at a predetermined position, the moving projection protrudes outside the ball joint, and an informing groove forming a groove into which the moving part is inserted and held, inside the discharge part facing the informing projection.

The informing projection may include a first adjusting bolt fastened to a lower side of a mounting hole disposed at the ball joint, and an inner elastic member a lower side of which is supported by the first adjusting bolt, an upper side of which supports the moving projection and which presses the moving projection using an elastic force.

A portable air purifier according to the present invention comprises a housing provided with an entrance part configured to suction air, provided therein with a filter part and a fan module and forming an air flow path in an up-down direction, a discharge body part disposed at an outlet of the housing and configured to guide a discharge direction of air, a first supporter connected to the discharge body part or integrated with the discharge body part and provided with a first curved surface groove formed into a concave grove, a second supporter coupled to the first supporter and provided therein with a second curved surface groove connected to the first curved surface groove, and a rotation supporter one side of which connects to the housing, the other side of which is disposed at a position facing the first curved surface groove and the second curved surface groove and which supports the first supporter and the second supporter in a rotatable manner.

The rotation supporter may include a core member disposed on a lower side of the second supporter and extended from a center to the outlet to the second supporter, a core supporter which is extended outside the core member, which is fixed to an inside of the housing and movement of which is restricted together with movement of the core member, and a ball joint, a lower side of which is coupled to the core member and movement of which is restricted and an upper side of which is disposed inside the first curved surface groove and the second curved surface groove, and which supports the first supporter and the second supporter in a rotatable manner.

The first supporter includes a first support body provided therein with the first curved surface groove formed into a concave groove and fixed to a center of the discharge body part, and a first wing member extending outside the first support body and facing the second supporter.

The first wing member and the second supporter are fixed as a result of fastening of a fastening member.

The second supporter may include a second support body provided with a hollow hole part communicating in the up-down direction and installed in a circumferential direction.

The second support body facing the hollow hole part may be provided therein with the second curved surface groove.

The rotating supporter may include a sphere-shaped ball joint formed disposed inside a sphere-shaped groove formed by the first curved surface groove and the second curved surface groove.

An outer diameter of the ball joint may be greater than an inner diameter of a lower end of the second curved surface groove to prevent the ball joint from escaping out of the second supporter.

According to a non-claimed embodiment, a frictional force between the first supporter and the ball joint and a frictional force between the second supporter and the ball joint may be inversely proportional to a distance between fie first supporter and the second supporter that are arranged to face each other with the ball joint therebetween.

### Advantageous Effect

In a portable air purifier according to the present invention, a discharge part may be installed on an upper side of a housing in a way that the discharge part is supported by a rotation supporter in a rotatable manner to readily adjust a discharge direction of air, thereby ensuring improvement in user satisfaction.

In the portable air purifier, a rotation angle of the discharge part may be limited to predetermined angles by a rotation guide, and an electric wire connected to the discharge part may be prevented from being broken or damaged, thereby ensuring a reduction in costs incurred for maintenance and repairs.

In the portable air purifier, a moving projection protruding outside a ball joint may be held in an informing groove formed at the discharge part, and a user may readily ascertain the ball joint arrives at an initial position, thereby ensuring improvement in user convenience.

Specific effects are described along with the above-described effects in the section of Detailed Description.

### BRIEF DESCRIPTION OF DRAWING

The accompanying drawings constitute a part of the specification, illustrate one or more embodiments in the disclosure, and together with the specification, explain the disclosure, wherein:
FIG. 1 is a perspective view showing a portable air purifier in one embodiment;
FIG. 2 is a cross-sectional view showing the portable air purifier in one embodiment;
FIG. 3 is a cross-sectional view showing a discharge part in one embodiment connected to a rotation guide;
FIG. 4 is an exploded perspective view showing the discharge part in one embodiment;
FIG. 5 is an exploded perspective view showing a rotation guide in one embodiment;
FIG. 6 is an exploded cross-sectional view showing the discharge part in one embodiment separated from a rotation supporter;
FIG. 7 is a cross-sectional view showing a rotation supporter in one embodiment;
FIG. 8 is a perspective view showing the discharge part and the rotation supporter in one embodiment;
FIG. 9 is an exploded perspective view showing a fan module in one embodiment;
FIG. 10 is a plan view showing the fan module in one embodiment;
FIG. 11 is a bottom view showing the fan module in one embodiment;
FIG. 12 is a cross-sectional view showing the fan module in one embodiment;
FIG. 13 is a perspective view showing a fan member in one embodiment;
FIG. 14 is a plan view showing the fan member in one embodiment;
FIG. 15 is a bottom view showing the fan member in one embodiment;
FIG. 16 is a front view showing the fan member in one embodiment;
FIG. 17 is a cross-sectional view showing the fan member in one embodiment;
FIG. 18 is a perspective view showing a fan module in another embodiment;
FIG. 19 is an exploded perspective view showing the fan module in another embodiment;
FIG. 20 is a plan view showing a core supporter in one embodiment; and
FIG. 21 is a view showing a ball joint installed between a first supporter and a second supporter in one embodiment.

### DETAILED DESCRIPTION

The above-described aspects, features and advantages are specifically described hereunder with reference to the accompanying drawings such that one having ordinary skill in the art to which the present invention pertains can make modifications thereto without departing from the scope of the invention which is defined by the appending claims. Below, preferred embodiments according to the disclosure are specifically described with reference to the accompanying drawings. In the drawings, identical reference numerals can denote identical or similar components.

### [Exterior of portable air purifier]

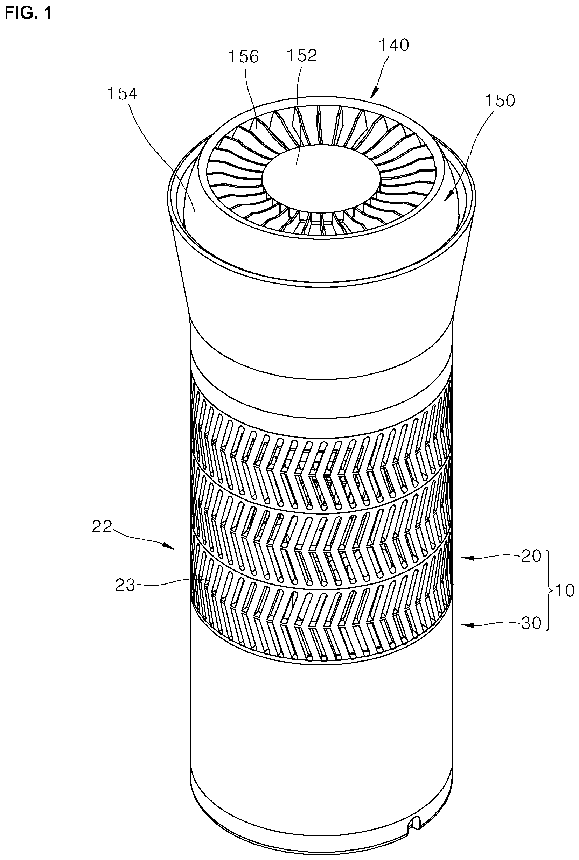

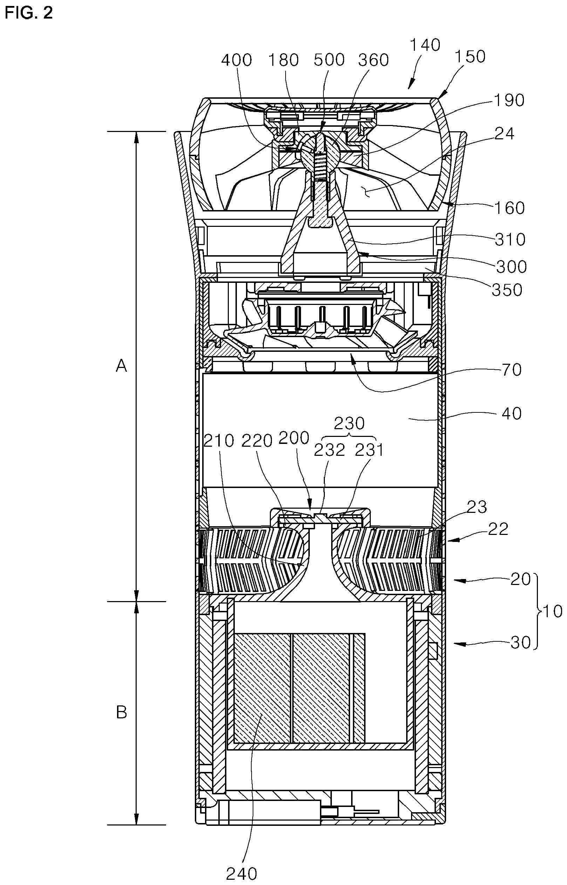

FIG. 1 is a perspective view showing a portable air purifier 1 in one embodiment, and FIG. 2 is a cross-sectional view showing the portable air purifier 1 in one embodiment.

As illustrated in FIGS. 1 and 2, the portable air purifier 1 in the embodiment may have an approximate cylinder shape. The portable air purifier 1 may include a housing 10, a filter part 40, a fan module 70, a discharge part 140, a sterilizer 200, a rotation supporter 300, and at least one of a rotation guide 400 and a position informing part 500.

The housing 10 may be provided with an entrance part 22, and the filter part 40, the sterilizer 200 and the fan module 70 may be disposed inside the housing 10. The housing 10 may form an air flow path in an up-down direction. Since a cylindrical air flow path is formed inside the housing 10, frictional resistance of air moving in the up-down direction may decrease.

Additionally, centers of the entrance part 22, the filter part 40, the sterilizer 200, the fan module 70, the outlet 24 and the rotation supporter 300 may be aligned in the up-down direction along a perpendicular reference line that passes through a center of the housing 10 in the up-down direction. Accordingly, the length of a path, in which air moves, may decrease, flow resistance of air may be reduced, and efficiency of air purification may improve, since air moving from a lower side to an upper side of the housing 10 flows linearly in a perpendicular direction.

When the portable air purifier 1 is disposed on a horizontal surface, the perpendicular reference line may align with a perpendicular line. The housing 10 may be made of a single member. However, the housing 10 may be made of a plurality of members, for example.

The portable air purifier 1 may be formed into a cylinder that is entirely long and stands in the up-down direction. Thus, a user may use the portable air purifier 1 in a state in which the portable air purifier 1 stands or lies. Additionally, since the portable air purifier 1 can be used in a state in which the portable air purifier 1 is seated in a groove such as a cup holder being concave downward, the portable air purifier 1 may stay at the same position reliably in places, e.g., inside a vehicle that rocks.

Directions are defined as follows. Under the assumption that a portion, where the discharge part 140 is disposed with respect to the first case 20, is referred to as an upper portion and that a portion, where the second case 30 is disposed with respect to the first case 20, is referred to as a lower portion, a "first direction" denotes an up-down direction or an axial direction. The first direction may have the same meaning as the perpendicular direction. A "second direction" is perpendicular to the first direction and denotes a left-right direction, a horizontal direction or a radial direction.

### [Entire structure of portable air purifier]

The portable air purifier 1 in this embodiment may include a housing 10, a filter part 40, a fan module 70, a discharge part 140, a rotation supporter 300, a rotation guide 400. The portable air purifier 1 may further include a position informing part 500, a sterilizer 200 and a battery 240.

The housing 10 may include a first case 20 and a second case 30. The first case 20 and the second case 30 may form an exterior skeleton of the portable air purifier 1. Lateral and bottom surfaces of the portable air purifier 1 may be formed by the first case 20 and the second case 30. An accommodation space 21 may be formed in the first case 20 and the second case 30. Electronic components and the like including the filter part 40, the fan module 70, the sterilizer 200, the rotation supporter 300 and the battery 240 may be accommodated in the accommodation space 21. The first case 20 and the second case 30 have enough strength to protect the accommodated components from an external impact, for example.

The filter part 40 may be installed in the accommodation space 21 of the first case 20 and disposed between the fan module 70 and an entrance part 22. That is, the filter part 40 may be disposed below the fan module 70, and may purify air suctioned through the entrance part 22 of the portable air purifier 1. The air, which is purified while passing through the filter part 40, may be discharged from an upper portion of the portable air purifier 1, passing through the fan module 70 and the discharge part 140.

The filter part 40 may be installed inside the first case 20, and may purify air suctioned into the entrance part 22. The filter part 40 may be formed into a cylinder that extends in the up-down direction.

The filter part 40 may include a single filter or when necessary, a plurality of filters stacked. The filter part 40 may be further provided with a filter case (not illustrated) for fixing a filter.

The filter case may be fixed to an inside of the first case 20 and have an insertion space for accommodating a filter inside the filter case.

The fan module 70 may be accommodated in the accommodation space 21 in the first case 20 and disposed between the discharge part 140 and the filter part 40. Specifically, the fan module 70 may be disposed between an outlet 24 and the filter part 40. That is, the fan module 70 may be disposed over the filter part 40, and the outlet 24, the rotation supporter 300, the rotation guide 400 and the discharge part 140 may be disposed over the fan module 70. The fan module 70 may suction air, introduced into a lower portion of the filter part 40 through the entrance part 22, and discharge the air to an upper portion of the first case 20.

The center of rotation of the discharge part 140 may be aligned with a center of the fan module 70 in the up-down direction. Air suctioned through the entrance part 22 may move upward, and be discharged from an upper side of the portable air purifier 1 while passing through the filter part 40, the fan module 70 and the discharge part 140 one after another.

In this embodiment, the fan module 70 includes a mixed flow fan, for example. The fan module 70 may suction air having passed through the filter part 40 in the axial direction and discharge the air in a direction between the axial direction and the radial direction.

The discharge part 140 may be disposed on an upper side of the first case 20 in a rotatable manner, and may guide a direction of discharge of air moved upward through the outlet 24. The rotation supporter 300 may be disposed over the first case 20, and the discharge part 140 may be installed in the rotation supporter 300 in a rotatable manner. Both of the upper and lower sides of the discharge part 140 may be open. Accordingly, air, moved to a lower portion of the discharge part 140 through the outlet 24, may be discharged out of the portable air purifier 1 through an upper portion of the discharge part 140.

The sterilizer 200 may be disposed below the filter part 40 and fixed to at least one of the first case 20 and the second case 30. The sterilizer 200 may be spaced a predetermined distance apart from the filter part 40, and may emit a light ray for sterilization toward the filter part 40. The light ray for sterilization emitted by the sterilizer 200 is harmful to the human body. Accordingly, a position of the sterilizer 200 may be determined such that the light ray for sterilization does not leak out of the portable air purifier 1 through the entrance part 22.

The battery 240 may be disposed in the accommodation space 21 provided inside the second case 30 and disposed below the sterilizer 200. The battery 240 may supply power for driving the portable air purifier 1.

### [Disposition structure of components of portable air purifier]

The accommodation space 21 in the portable air purifier 1 may be divided into a first area A and a second area B. When the accommodation space 21 is divided in the up-down direction, an upper area may be the first area A, and a lower area may be the second area B. The first area A and the second area B are conceptually divided instead of being physically divided.

In one embodiment, the accommodation space 21 of the first case 20 and the accommodation space 21 in the second case 30, forming the skeleton of the portable air purifier 1, may be respectively set to the first area A and the second area B.

Components in relation to suction, purification and discharge of air may be disposed in the first area A. That is, since the entrance part 22, the filter part 40, the fan module 70, the rotation supporter 300 and the discharge part 140 are disposed in the first area A, air may flow from a lower side to an upper side in the first area A, and a discharge direction of air may be adjusted by the discharge part 140 that is installed in a rotatable manner.

The entrance part 22, provided with a plurality of entrance holes 23 as a passage for suctioning air, may be disposed at the first case 20. The outlet 24 as a passage for discharging air purified in the first area A, and the discharge part 140 disposed at the rotation supporter 300 in a rotatable manner may be disposed over the first case 20. Accordingly, an air flow path connecting the filter part 40, the fan module 70 and the discharge part 140 may be formed inside the first case 20.

That is, the entrance part 22, the filter part 40, the fan module 70, the discharge part 140, the rotation supporter 300, a rotation informing part and the outlet 24 may be installed in the first area A. A flow path needed for air suctioned into the portable air purifier 1 to pass through the air purifier may be formed in the first area A.

Components, which do not directly relate to an air flow for purifying air, may be disposed in the second area B. That is, a controller including a PCB, the battery 240 and the like may be installed in the second area B.

In this embodiment, the hosing 10 may be formed into a cylinder having a vertical length greater than a horizontal length. The first area A in the upper portion may have a vertical length greater than that of the second area B in the lower portion. That is, when the portable air purifier 1 stands vertically, the first area A in the upper portion make take up more space than the second area B in the lower portion.

Since the discharge part 140 is disposed at the rotation supporter 300 in a rotatable manner, a discharge direction of air purified in the upper portion of the portable air purifier 1 may be readily adjusted. Accordingly, the air purified in the portable air purifier 1 may reach the face of the user more easily.

When the portable air purifier 1 is placed and used on a bottom surface placed further downward than the face of the user, the portable air purifier 1 may stand vertically rather than lie transversely to allow more air, purified in the portable air purifier 1, to reach the face of the user.

To this end, when air is discharge from the upper portion of the portable air purifier 1 through the discharge part 140 rotated in a predetermined direction in a state where the portable air purifier 1 stands vertically, more air purified in the portable air purifier 1 may reach the face of the user.

### [Specific configuration of components of portable air purifier]

The portable air purifier 1 in one embodiment may include at least one of a housing 10, a filter part 40, a fan module 70, a discharge part 140, a rotation supporter 300, a rotation guide 400 and a position informing part 500. The portable air purifier 1 in one embodiment may further include a sterilizer 200 and a battery 240.

### [First case]

The housing 10 may include a first case 20 and a second case 40, and the first case 20 may have an accommodation space 21 therein and be provided with an entrance part 22 on a lateral surface of a lower portion thereof. The first case 20 may have a cylinder shape and have upper and lower sides open. The first case 20 may be made of a single component, or when necessary, of a plurality of members. The first case 20 in one embodiment is made of a plurality of members, and the members may be coupled in various ways such as fitted-coupling, a coupling with an adhesive, welding, a connection with a fastening member 195 such as a bolt and the like.

Additionally, air may be suctioned through the lateral surface of the lower portion of the first case 20 and discharged through the upper side of the first case 20. To this end, the entrance part 22 provided with entrance holes 23 may be disposed along a circumference of the lower portion of the first case 20, and an outlet 24 for discharging air may be disposed on the upper side of the first case 20.

In a state where the entrance part 22 for suctioning air is disposed along an outer circumference of the first case 20, a filter part 40 may be disposed on an upper side spaced from the entrance part 22. Accordingly, air may flow uniformly across the entire surface area of the filter part 40.

The entrance part 22 may have a plurality of entrance holes 23, and the entrance holes 23 may be disposed at a slant in the form of an oblique line, and when necessary, may form a hole in the form of an inequality symbol that is bent at a center. The entrance holes 23 may be modified in various ways, for example, may be additionally formed on a lateral surface of the housing 10, on which the filter part 40 is disposed, to increase a flow rate of air flowing into the filter part 40.

Further, the housing 10 may be modified in various ways, that is, may include three or more members.

### [Second case]

The second case 30 may connect to the lower portion of the first case 20 and may be modified in various ways within the technical scope in which a space for installing electronic components including the battery 240 is formed inside the second case 30.

At least one of the first case 20 and the second case 30 may be formed into a cylindrical case. Both the first case 20 and the second case 30 may have a cylindrical shape or the second case 30 may only have a cylindrical shape. When necessary, the first case 20 may only have a cylindrical shape.

In the case of a second case 30 having a cylinder shape and extending in the up-down direction, the user may readily hold an outer circumference of the second case 30 with the hand, and the second case 30 may be easily held in a vehicle's cup holder provided with a groove having a circular cross section.

In the case of a first case 20 having a cylinder shape, friction, caused as a result of contact between air, which moves upward while passing through the first case 20, and the inside of the first case 20 having a curved shape, may be reduced, thereby enabling the air to flow more smoothly.

Additionally, an air flow path may be formed inside the first case 20, and no air flow path may be formed inside the second case 30. Accordingly, air may be smoothly suctioned and discharged through the first case 20 even when the second case 30 is held in the cup holder or the user's hand, thereby ensuring improvement in usability.

### [Filter part]

The filter part 40 may be installed inside the first case 20 and modified in various ways within the technical scope in which the filter part 40 purifies air suctioned into the entrance part 22. The filter part 40 in one embodiment may have a cylinder shape.

The first case 20 may have a circular pipe shape, and the filter part 40 installed inside the first case 20 may have a cylinder shape contacting an inside of the first case 20. Accordingly, impurities of air passing through the first case 20 may be effectively removed.

In addition, the filter part 40 has a circular cross-section and includes a largest area inside the first case 20. In addition, the filter 40 is manufactured in a cylindrical shape, and when an upper side and a lower side of the filter part 40 are cut, pressure loss is minimized, thereby maximizing a performance of the filter part 40.

In addition, an outer diameter of the filter part 40 is manufactured to be larger than a suction diameter of a bell mouth 132 to guide air suction into a mixed flow fan module 70, thereby maximizing a volume of the filter 40.

In this embodiment, the filter part 40, the fan module 70 and the discharge part 140 may be disposed along the housing 10 in the up-down direction, and air may also flow in the up-down direction. That is, an air flow resulting from an operation of the fan module 70 may be performed in the same linear direction as the direction in which the filter part 40, the fan module 70 and the discharge part 140 are disposed.

As a result of the linear flow of air, resistance against an air flow may be reduced, and a smooth air flow may be ensured. Thus, a sufficient amount of air may be suctioned and a sufficient amount of air corresponding to the sufficient amount of the suctioned air may be discharged by the fan module 70, thereby ensuring improvement air purification performance of the portable air purifier 1.

### [Fan module]

The fan module 70 may be disposed between the filter part 40 and the outlet 24 and modified in various ways within the technical scope in which the fan module 70 rotates a fan to blow air toward the outlet 24.

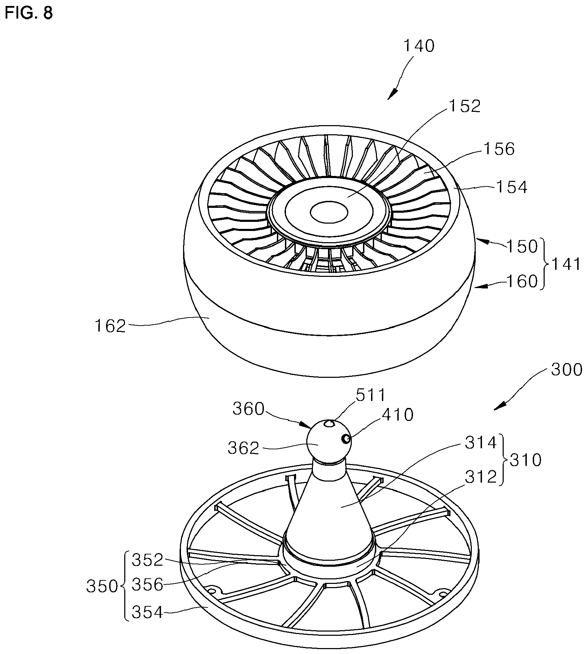

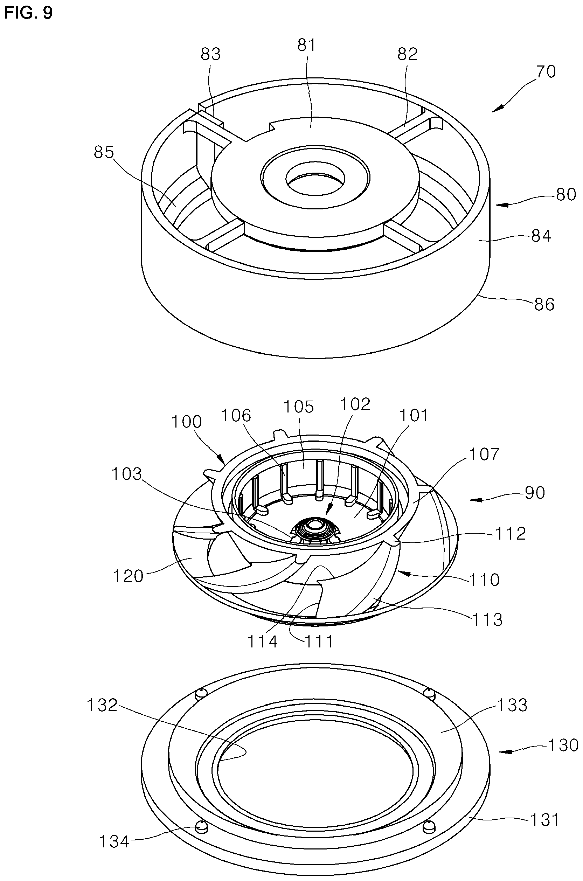

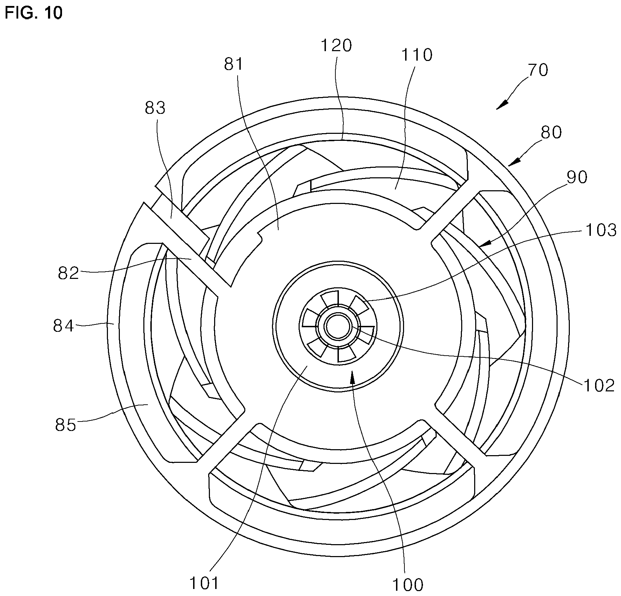

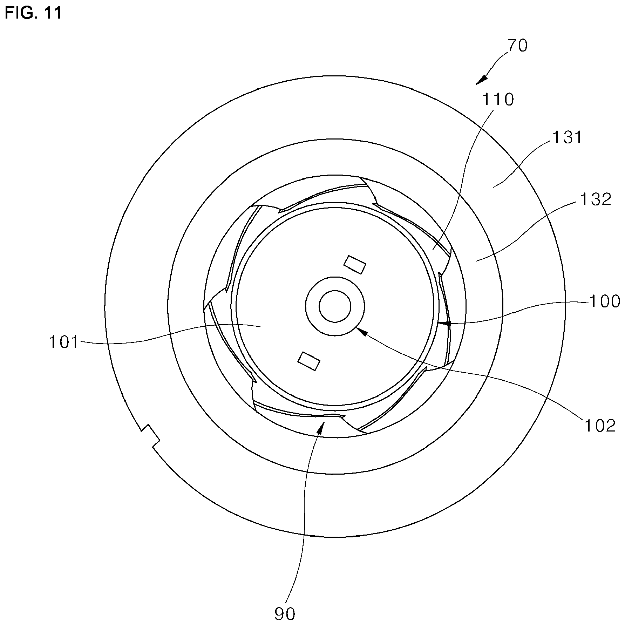

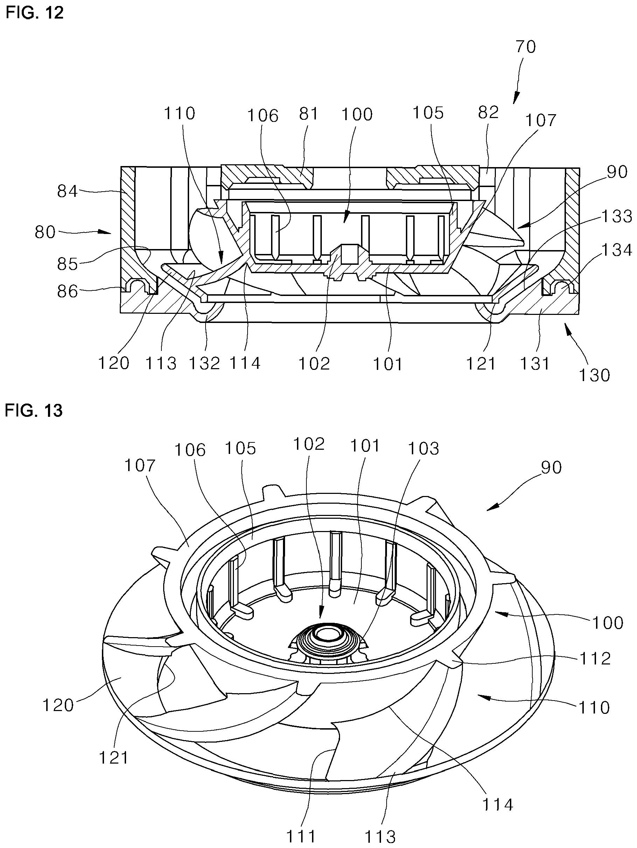

FIG. 8 is a perspective view showing the discharge part and the rotation supporter in one embodiment, FIG. 9 is an exploded perspective view showing a fan module in one embodiment, FIG. 10 is a plan view showing the fan module in one embodiment, FIG. 11 is a bottom view showing the fan module in one embodiment, and FIG. 12 is a cross-sectional view showing the fan module in one embodiment.

As illustrated in FIGS. 8 to 12, the fan module 70, a circular mixed flow fan module, is applied, a shape of the fan module 70 may match or correspond to a cylinder shape of the inside of the first case 20. Accordingly, the first case 20 may not be scaled-up despite fixation or a coupling of the fan module 70, thereby enabling a compact product. Additionally, when the portable air purifier 1 according to the present disclosure is applied to a vehicle, the portable air purifier 1 may be small enough to fit into a cup holder.

Since the circular mixed flow fan module is applied to the fan module 70, a small-sized upward discharge-type air purifier, which ensures maximized hydrodynamic performance, may be provided. A fan type of the fan module 70 may be a mixed flow fan, and an inner structure of the fan module 70 may change to mount the mixed flow fan.

A fan member 90 according to the disclosure may rotate as a result of an operation of a motor. A rotation shaft of the motor configured to rotate the fan member 90 may only connect to the fan member 90. A rotor may be installed in the fan member 90, and a stator may be installed in the fan housing 80 rotation of which is restricted. Since a magnetic field of the stator changes, the shaft connected to the fan member 90 may rotate along with the rotor such that the rotor and the fan member 90 rotate around the stator. The configuration of the motor for rotating the fan member 90 is well known. Thus, detailed description in relation to this is omitted.

The fan module 70 in one embodiment may include a fan housing 80, a fan member 90, and a fan base 130.

### [Fan housing]

The fan housing 80 may be fixed to the inside of the first case 20, and may be modified in various ways within the technical scope in which the fan housing 80 is provided therein with an enough space for the fan member 90 to rotate. The fan housing 80 in one embodiment may include at least one of a support plate 81, a connecting and supporting part 82, a wire guide 83, a lateral surface supporter 84, an inner guide 85, and a protruding boss 86.

The support plate 81 may be formed into a circular plate and provided with a hole at a center thereof. A motor may be disposed at the center of the support plate 81 or the shaft connected to the motor may be disposed in the first direction. The support plate 81 may be disposed on a lower side of a core member 310.

The connecting and supporting part 82 may extend outside the support plate 81 and connect to the lateral surface supporter 84. A plurality of connecting and supporting parts 82 in one embodiment may be provided and formed into a rod. The connecting and supporting part 82, extending outside the support plate 81 in a radial direction of the support plate, may connect to the lateral surface supporter 84.

The connecting and supporting part 82 in one embodiment may be disposed on a lower side of a core supporter 350 of the rotation supporter 300. Four connecting and supporting parts 82 may be disposed around the support plate 81 at 90-degree intervals, and the core supporter 350 may be disposed on an upper side of the connecting and supporting part 82 to face the connecting and supporting part 82.

The wire guide 83 and the connecting and supporting part 82 may be disposed one after another, and the wire guide 83 may support a lower portion of an electric wire 600 of an electronic device such that the electric wire 600 moves along a lateral surface of the connecting and supporting part 82. The wire guide 83 may be formed into a projection that is disposed on a lower side of the lateral surface of the connecting and supporting part 82 and may guide an electric wire 600 of a motor installed in the support plate 81 in a way that the electric wire 600 is extended and disposed outside the fan housing 80. The wire guide 83 may form a concave groove which is disposed on the lateral surface of the connecting and supporting part 82 and in which the electric wire 600 is installed. Accordingly, the electric wire 600 installed in the wire guide 83 may be disposed in the concave groove on the lateral surface of the connecting and supporting part 82 and supported by the wire guide 83, thereby preventing the electric wire 600 from being damaged.

The lateral surface supporter 84 may be formed into a cylindrical pipe and have upper and lower sides that are open. An outside of the lateral surface supporter 84 may contact an inside of the housing 10, and an inside of the lateral surface supporter 84 may connect to the connecting and supporting part 82.

The inner guide 85 may form an inclined surface that is disposed downward at a slant from a lower side of the lateral surface supporter 84 toward the inside of the lateral surface supporter in a radial direction of the lateral surface supporter. The inner guide 85 may be formed inside the lateral surface supporter 84 and may prevent air, blown upward by the fan member 90, from moving to an entrance of the fan member 90 through an outer surface of the fan member 90, that is, prevent a whirl.

The protruding boss 86 may extend to a lower end of the lateral surface supporter 84, and may be modified in various ways within the technical scope in which the protruding boss 86 is provided with a groove into which a coupling projection 134 of a fan base 130 described below is inserted. A plurality of protruding bosses 86 in one embodiment may be disposed in a circumferential direction of the lateral surface supporter 84.

### [Fan member]

The fan member 90 may be disposed inside the fan housing 80 in a rotatable manner, and may be modified in various ways within the technical scope in which the fan member 90 moves air toward the discharge part 140.

A mixed flow fan is used as the fan member 90 in one embodiment, but the fan member 90 is not limited. Another type of fan may be used as the fan member 90 according to the disclosure. The fan member 90 in one embodiment may include at least one of a hub 100, a fan wing 110 and a shroud 120.

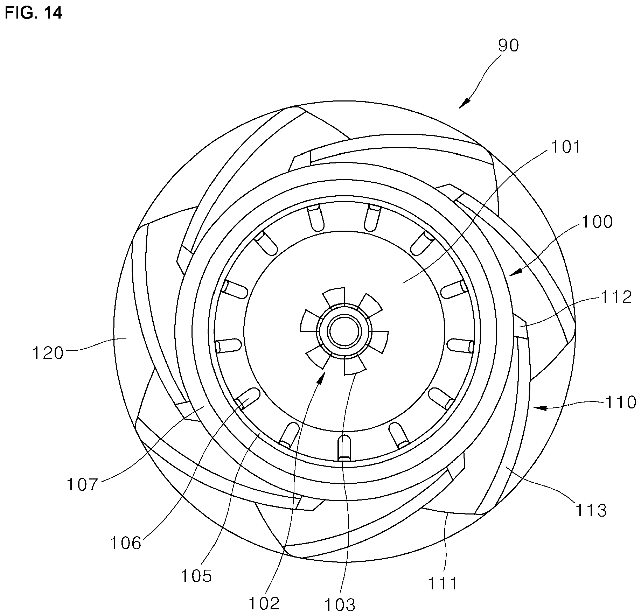

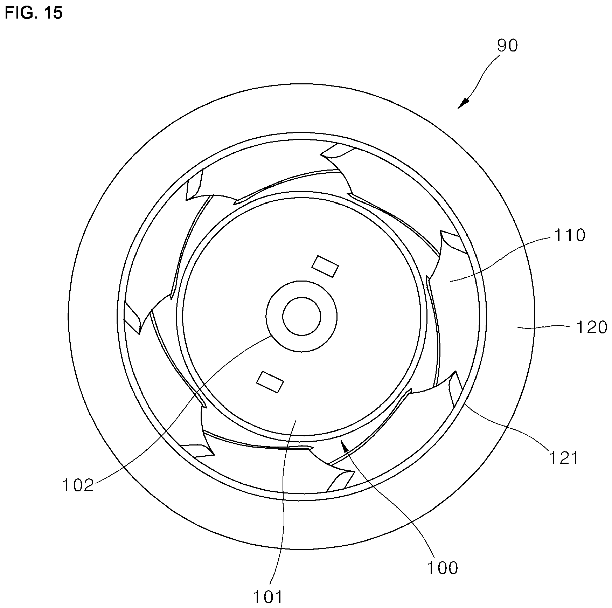

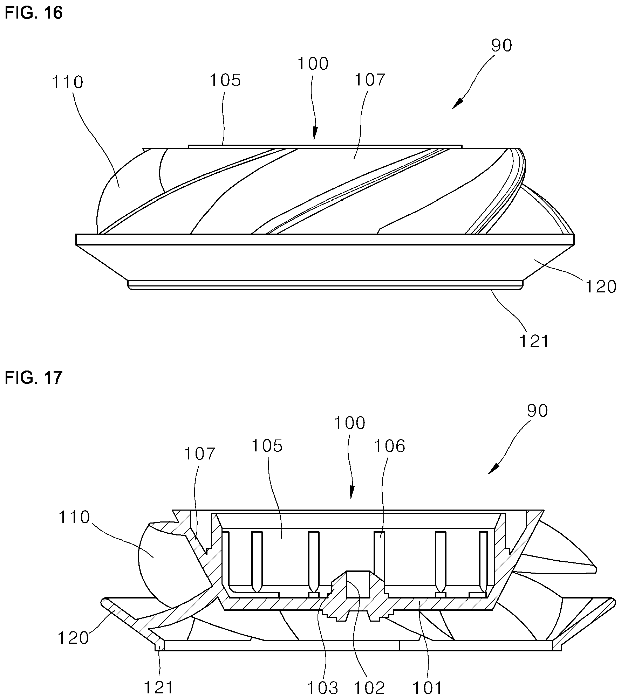

FIG. 13 is a perspective view showing a fan member in one embodiment, FIG. 14 is a plan view showing the fan member in one embodiment, FIG. 15 is a bottom view showing the fan member in one embodiment, FIG. 16 is a front view showing the fan member in one embodiment, and FIG. 17 is a cross-sectional view showing the fan member in one embodiment.

As illustrated in FIGS. 13 to 17, the hub 100 may be disposed at a center of the fan housing 80, and may be modified in various ways within the technical scope in which the hub 100 receives external power and rotates.

The hub 100 may be disposed at a center of the fan member 90 in a radial direction of the fan member, and may rotate along with the rotor constituting the motor and the shaft that is an output shaft of the motor. The hub 100 in one embodiment may include at least one of a hub plate 101, a shaft coupler 102, an inner protrusion 105 and a skirt part 107.

The hub plate 101 may be formed into a circular plate and be parallel with the support plate 81. The hub plate 101 may be provided with a shaft coupler 102. The shaft coupler 102 may be disposed at a center of the hub plate 101 in a radial direction of the hub plate. The shaft coupler 102 may protrude from an upper side and a lower side of the hub plate 101.

The shaft coupler 102 may be coupled to an end of the shaft, configured to deliver rotation power, in an axial direction of the shaft. For example, the shaft coupler 102 may be coupled to the shaft in a way that the shaft is fitted into the shaft coupler 102.

A first reinforcing projection 103 may be disposed along an outer circumference of the shaft coupler 102 at predetermined intervals. The first reinforcing projection 103 may be radially disposed around the shaft coupler 102, and may form a strip-shaped projection outside the shaft coupler 102. Accordingly, stress concentrated on the shaft coupler 102 may be scattered through the first reinforcing projection 103, and structural rigidity of the shaft coupler 102 may improve.

The inner protrusion 105 may protrude upward from the hub plate 101 to an upper portion in which the support plate 81 is installed. The inner protrusion 105 in one embodiment may be disposed along an outer edge of the hub plate 101 in a circular arc form. The inner protrusion 105 may be formed into a pipe extending in the up-down direction.

Additionally, a second reinforcing projection 106 may be disposed along an inner circumference of the inner protrusion 105 at predetermined intervals. The second reinforcing projection 106 may be disposed along an inner surface of the inner protrusion 105 in the first direction, and a lower side of the second reinforcing projection 106 may form a strip-shaped projection extending toward the shaft coupler 102. Accordingly, stress concentrated on the inner protrusion 105 may be scatted through the second reinforcing projection 106, and structural rigidity of the inner protrusion 105 may improve. When necessary, the rotor of the motor may be fixed to an inside of the inner protrusion 105.

The skirt part 107 may protrude upward from an edge of the hub plate 101 to the support plate 81. The skirt part 107 may form an inclined surface that is inclined outward in the second direction as the skirt part 107 becomes farther from the hub plate 101 in the first direction. The skirt part 107 may be disposed outside the inner protrusion 105, and an inner diameter of the skirt part 107 may increase gradually from a lower side to an upper side.

For example, a shape, in which the hub plate 101 and the skirt part 107 connect, may be a truncated cone shape which is provided therein with a hollow hole and has one side open. The skirt part 107 may be formed into a funnel having an upper side open and a lower side blocked by the hub plate 101.

The shroud 120 may be installed in a way that the shroud 120 connects to an end of the fan wing 110 in a ring shape, and may be modified in various ways within the technical scope in which the shroud 120 is spaced from the fan base 130.

The shroud 120 may be arranged along an outer circumference of the skirt part 107, and the shroud 120 and the skirt part 107 may be connected by the fan wing 110. Additionally, an outer diameter of the hub 100 and an inner diameter of the shroud 120 may decrease gradually from an upper side to a lower side.

The shroud 120 may be spaced a predetermined distance from the hub 100 in the radial direction and may be disposed outside the hub 100 in the radial direction of the hub. The shroud 120 may be spaced from the hub 100 by a distance corresponding to a length of the fan wing 110 in a radial direction of the fan wing. Each fan wing 110 may connect between the skirt part 107 included in the hub 100 and the shroud 120.

The shroud 120 may form an inclined surface that is approximately parallel with the skirt part 107. In this embodiment, the skirt part 107 and the shroud 120 are arranged in a way that a gap between the skirt part 107 and the shroud 120 increases gradually toward an upper side of the shroud 120, for example.

An entrance projection 121 disposed on a lower side of the shroud 120 may be formed into a ring and may extend from the lower side of the shroud 120 having a funnel shape in the first direction. Since the entrance projection 121 is disposed inside a bell mouth 132 described below, air, flowing into an entrance on the lower side of the shroud 120 along an outer side of the shroud 120, may be prevented from whirling.

A plurality of fan wings 110 may be provided and spaced along an outer circumferential surface of the hub 100 at regular intervals. The fan wing 110 may protrude outside the hub 100 with respect to the hub 100, and extend in a spiral form. The plurality of fan wings 110 may be spaced a predetermined distance apart from each other in a circumferential direction of the hub 100.

The fan wing 110 in one embodiment may protrude outside the skirt part 107 in a centrifugal direction extending from a center of the shaft coupler 102 in a spiral shape. Under the assumption that a direction from the outside of the shaft coupler 102 toward the shat coupler 102 is a radial direction, an inside of the fan wing 110 in a radial direction of the fan wing may connect to the skirt part 107, and an outside of the fan wing 110 in the radial direction of the fan wing may connect to the shroud 120 described below.

The skirt part 107 may be a portion directly connected to the fan wing 110 among the components of the hub 100 and directly contacting air passing through the fan wing 110. The skirt part 107 may closely relate to a path in which air passing through the fan module 70 flows.

Each fan wing 110 connecting between the shroud 120 and the skirt part 107 may include a first end part 111, a second end part 112, a first edge 113 and a second edge 114.

The first end part 111 may be disposed at a front end of the fan wing 110 in a rotation direction of the fan wing, and formed into a straight line that extends in the radial direction. The rotation direction is defined as a direction in which the fan member 90 rotates.

The second end part 112 may be disposed at a rear end of the fan wing 110 in the rotation direction of the fan wing and formed radially around the shaft coupler 102.

The first edge 113 may connect one end of the first end part 111 and one end of the second end part 112. The first edge 113 may connect to an inner circumferential surface of the shroud 120.

The second edge 114 may connect the other end of the first end part 111 and the other end of the second end part 112. The second edge 114 may connect to the outer circumferential surface of the hub 100.

That is, one end of the first end part 111 and one end of the second end part 112 may connect to the inner circumferential surface of the shroud 120. The other end of the first end part 111 and the other end of the second end part 112 may connect to an outer circumferential surface of the skirt part 107.

One end of the first end part 111 may be disposed closer to the center of the hub plate 101 in a radial direction of the hub plate than one end of the second end part 112, and the other end of the second end part 112 may be disposed closer to the center of the hub plate 101 in the radial direction of the hub plate than the other end of the first end part 111, since one end and the other end of the first end part 111 are disposed further forward than one end and the other end of the second end part 112 in the rotation direction and that a radius of the skirt part 107 decreases toward a front in the radial direction.

In this embodiment, the fan wing 110 may connect to the skirt part 107 of the hub 110. The skirt part 107 may form an inclined surface that is inclined upward, to guide a flow of air, flowing into the fan module 70, upward at a slant.

### [Fan base]

As illustrated in FIG. 9, the fan base 130 may be coupled to a lower side of the fan housing 80, and may be modified in various ways within the technical scope in which the fan base 130 guides air having passed through the filter part 40 into the fan member 90.

The fan base 130 may be disposed between the filter part 40 and the fan member 90. An edge of the fan base 130 may have a shape corresponding to a shape of an edge of the filter part 40. For example, when the filter part 40 has a cylinder shape and the edge of the filter part 40 has a circular shape, the fan base 130 may have a ring shape with a hollow hole.

A base plate 131 may be disposed between the filter part 40 and the fan member 90. The base plate 131 may be formed into a plate that extends in a ring shape and provided with a hollow hole for movement of air at a center thereof.

A bell mouth 132 is installed in an annular shape on the inside of the base plate 131. The bell mouth 132 may have a longitudinal cross section that is concave and encircles a lower side of the entrance projection 121 of the shroud 120 and may extend in a circumferential direction.

The bell mouth 132 may be formed in a way that the bell mouth 132 encircles an outer circumferential surface of the hollow hole formed at a center of the base plate 131. The bell mouth 132 may form a groove that is convex downward and concave upward.

The bell mouth 132 may be at least partially inserted into the shroud 120 in a radial direction of the shroud. The bell mouth 132 may guide a suction flow at an entrance of the fan module 70 and contribute to improvement in suction and discharge performance of the fan module 70.

A coupling projection 134 may protrude from the base plate 131 upward and be fitted-coupled to the groove of the protruding boss 86 of the fan housing 80 to fix the fan base 130 to the lower side of the fan housing 80.

As a result of the coupling between the coupling projection 134 and the protruding boss 86, the fan base 130 and the fan housing 80 may be coupled at a plurality of positions. When the fan base 130 and the fan housing 80 are coupled as described above, the fan member 90 may be installed between the fan base 130 and the fan housing 80 in a rotatable manner.

A protruding rib 133 may protrude from the base plate 131 and be disposed outside the bell mouth 132 in a radial direction of the bell mouth. The protruding rib 133 in one embodiment may be disposed outside the bell mouth 132 in the radial direction of the bell mouth and installed in the form of a ring that encircles an outer circumference of the bell mouth 132. The protruding rib 133 and the base plate 131 may be integrally formed. Specifically, the base plate 131, the bell mouth 132 and the protruding rib 133 may be integrally formed.

Additionally, the protruding rib 133 may be disposed at a slant at the same angle as that of an outer surface of the shroud 120, and a gap between the protruding rib 133 and the shroud 120 may remain constant. The protruding rib 133 may protrude in the form of an inclined surface. The inclined surface of the protruding rib 133 may be spaced a predetermined distance from the shroud 120 and be parallel with the inclined surface of the shroud 120.

Additionally, the inclined surface of the protruding rib 133 may have the same slant angle as the inclined surface of the inner guide 85 of the fan housing 80. Accordingly, part of air, moving upward through a space between the shroud 120 and the skirt part 107, may be prevented from moving to the entrance of the fan member 90 through the space between the shroud 120 and the protruding rib 133, that is, prevent a whirl.

### [Another example of fan module]

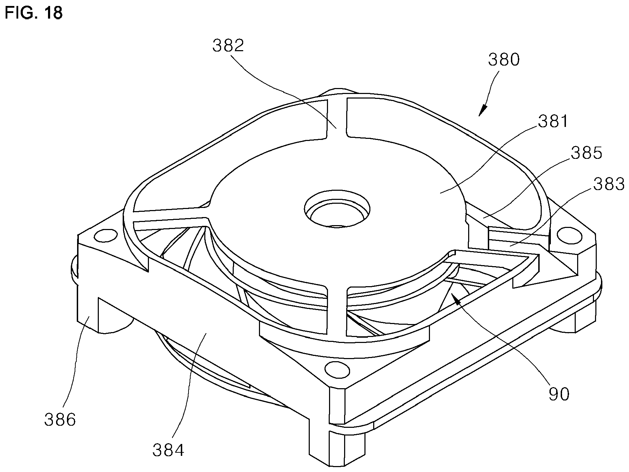

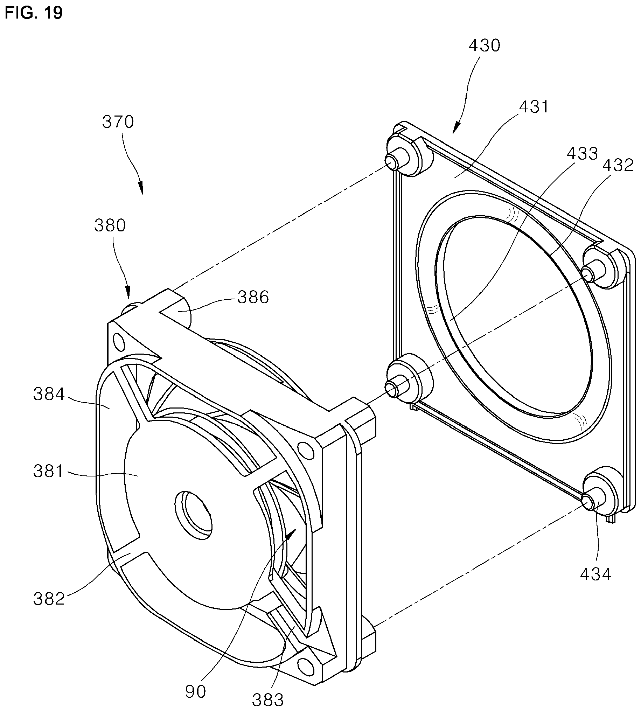

FIG. 18 is a perspective view showing a fan module 370 in another embodiment, and FIG. 19 is an exploded perspective view showing the fan module 370 in another embodiment.

As illustrated in FIGS. 18 and 19, the fan module 370 may have a rectangular exterior. Additionally, since the fan module 370 is provided therein with a circular mixed flow fan module, a small-sized upward discharge-type air purifier, which ensures maximized hydrodynamic performance, may be provided. The fan module 370 in another embodiment may include a fan housing 380, a fan member 90 and a fan base 430.

### [Fan housing]

The fan housing 380 may have various exteriors within the technical scope in which the exterior of the fan housing 380 includes a rectangular edge. The fan housing 380 in one embodiment may include at least one of a support plate 381, a connecting and supporting part 382, a wire guide 383, a lateral surface supporter 384, an inner guide 385 and a protruding boss 386.

The support plate 381 may be formed into a circular plate and provided with a hole at a center thereof. A motor may be disposed at the center of the support plate 381, or a shaft connected to the motor may be disposed in the first direction.

The connecting and supporting part 382 may extend outside the support plate 381 and connect to the lateral surface supporter 384. A plurality of connecting and supporting parts 382 in one embodiment may be provided and formed into a rod. The connecting and supporting part 382, extending outside the support plate 381 in a radial direction of the support plate, may connect to the lateral surface supporter 384.

The wire guide 383 and the connecting and supporting part 382 may be disposed one after another, and the wire guide 383 may support a lower portion of an electric wire 600 of an electronic device such that the electric wire 600 moves along a lateral surface of the connecting and supporting part 382. The wire guide 383 may be formed into a projection that is disposed on a lower side of the lateral surface of the connecting and supporting part 382 and may guide an electric wire 600 of a motor disposed on the support plate 381 in a way that the electric wire 600 is extended and disposed outside the fan housing 380. The wire guide 383 may form a concave groove which is disposed on the lateral surface of the connecting and supporting part 382 and in which the electric wire 600 is installed. Accordingly, the electric wire 600 installed in the wire guide 383 may be disposed in the concave groove on the lateral surface of the connecting and supporting part 382, and its lower portion may be supported by the wire guide 383, thereby preventing the electric wire 600 from being damaged. The lateral surface supporter 384 may be formed into a rectangular frame and have upper and lower sides that are open. An outside of the lateral surface supporter 384 may be formed into a rectangular frame, and an inside of the lateral surface supporter 384 may form a passage through which air moves and form an inner space having a rectangular or circular shape.

The inner guide 385 may form an inclined surface that is disposed downward at a slant from a lower side of the lateral surface supporter 384 toward the inside of the lateral surface supporter in a radial direction of the lateral surface supporter. The inner guide 385 may be formed inside the lateral surface supporter 384 and may prevent air, blown upward by the fan member 90, from moving to an entrance of the fan member 90 through an outer surface of the fan member 90, that is, prevent a whirl.

The protruding boss 386 may extend to a lower end of the lateral surface supporter 384, and may be modified in various ways within the technical scope in which the protruding boss 386 is provided with a groove into which a coupling projection 134 of a fan base 430 described hereunder is inserted. A plurality of protruding bosses 386 in one embodiment may be disposed at each edge of the lateral surface supporter 384.

A mixed flow fan may be used as the fan member 90. Description in relation to this is provided above.

### [Fan base]

A rectangular fan base 430 may be coupled to a lower side of a rectangular fan housing 380 and may be modified in various ways within the technical scope in which the fan base 430 guides air having passed though the filter part 40 into the fan member 90.

A shape of the edge of the fan base 430 may correspond to a shape of the edge of the fan housing 380. For example, when the fan housing 380 has a rectangular shape, the fan base 430 may be formed into a rectangular plate provided with a hollow hole.

A base plate 431 may have a rectangular plate shape and be provided with a hollow hole for allowing air to move at a center thereof.

A bell mouth 432 is installed in an annular shape on the base plate 431. The bell mouth 432 may have a longitudinal cross section that is concave and encircles a lower side of an entrance projection 121 of a shroud 120 and may extend in the circumferential direction. The bell mouth 432 may be formed in a way that the bell mouth 432 encircles an outer circumferential surface of the hollow hole formed at a center of the base plate 431. The bell mouth 432 may form a groove that is convex downward and concave upward.

A coupling projection 434 may protrude from the base plate 431 upward and be fitted-coupled to the groove of the protruding boss 386 of the fan housing 380 to fix the fan base 430 to the lower side of the fan housing 380. As a result of the coupling between the coupling projection 434 and the protruding boss 386, the fan base 430 and the fan housing 380 may be coupled at a plurality of positions. When the fan base 430 and the fan housing 380 are coupled as described above, the fan member 90 may be installed between the fan base 430 and the fan housing 380 in a rotatable manner.

### [Discharge part]

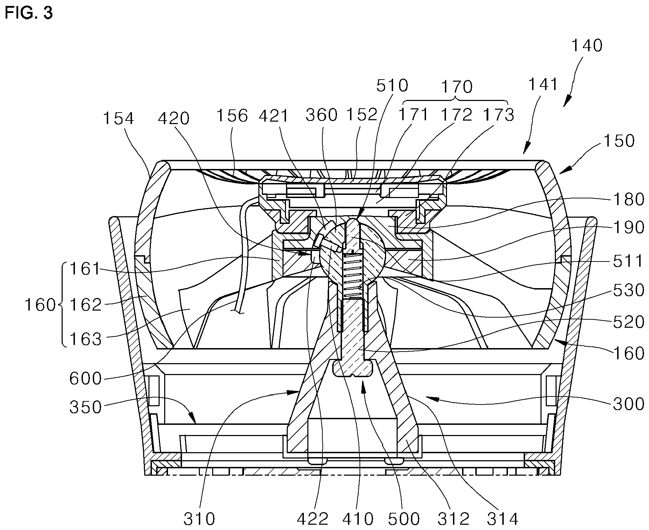

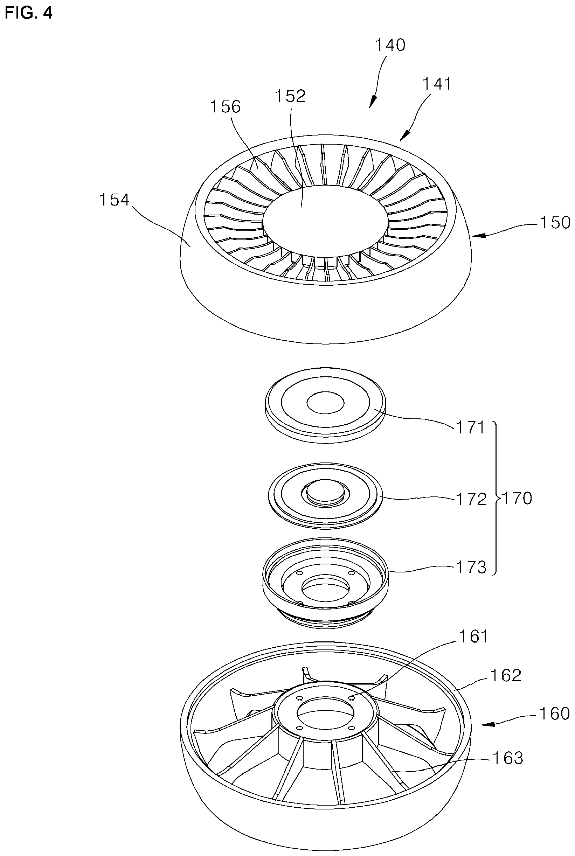

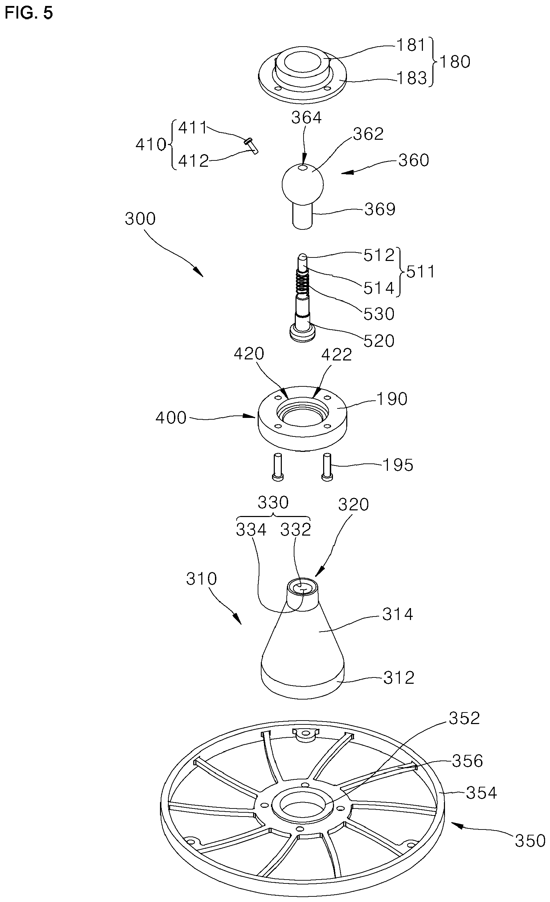

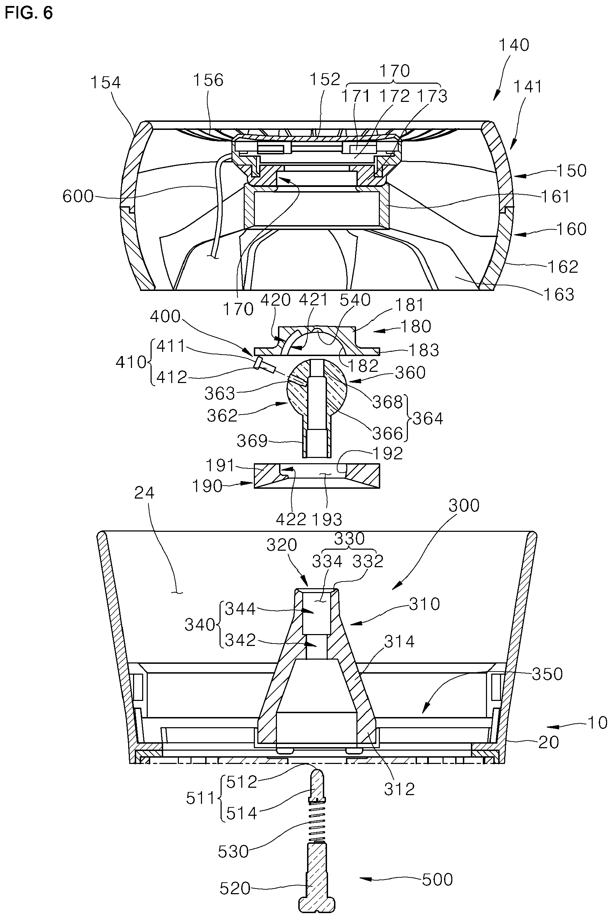

FIG. 3 is a cross-sectional view showing a discharge part 140 in one embodiment connected to a rotation guide 400, FIG. 4 is an exploded perspective view showing the discharge part 140 in one embodiment, FIG. 5 is an exploded perspective view showing a rotation guide 300 in one embodiment, and FIG. 6 is an exploded cross-sectional view showing the discharge part 140 in one embodiment separated from a rotation supporter 300.

As illustrated in FIGS. 3 to 6, the discharge part 140 may be disposed at an outlet 24 of a housing 10, may be installed in a rotation supporter 300 in a rotatable manner, and may be modified in various ways within the technical scope in which the discharge part 140 guides a discharge direction of air having passed through a fan module 70. The discharge part 140 according to the present disclosure may be installed in a sphere-shaped ball joint 360 included in the rotation supporter 300 in a rotatable manner and may smoothly rotate.

The discharge part 140 disposed on an upper side of the housing 10 may be open in the up-down direction and connected to the rotation supporter 300 in a rotatable manner such that a discharge direction of air having passed through the fan module 70 is adjusted. The discharge part 140 in one embodiment may include a discharge body part 141, a first supporter 180 and a second supporter 190.

### [Discharge body part]

The discharge body part 141 may be disposed at the outlet 24 of the housing 10 and may guide a discharge direction of air. The discharge body part 141 in one embodiment may include a first discharge part 150, a second discharge part 160 and a core mounting part 170.

### [First discharge part]

The first discharge part 150 may be disposed on one side (an upper side in FIG. 3) of the ball joint 360, and may be modified in various ways within the technical scope in which the first discharge part 150 is provided with a plurality of vanes 156 for guiding discharge of air. The first discharge part 150 in one embodiment may include a first discharge core 152, a first discharge body 154 and a vane 156.

The first discharge core 152 may be disposed on an upper side of the ball joint 360 and may have various shapes including a circular plate shape. The first discharge body 154 may be spaced from the first discharge core 152 and disposed in a ring shape that encircles an outside of the first discharge core 152. An outside of the first discharge body 154 may be formed into a curved surface and installed in a state of being spaced from the housing 10. Accordingly, the first discharge body 154 may be prevented from contacting the hosing 10 when the first discharge part 150 rotates.

Since the first discharge core 152 and the first discharge body 154 are connected by the plurality of vanes 156, the first discharge core 152, the first discharge body 154 and the vane 156 may rotate together.

### [Second discharge part]

The second discharge part 160 may be disposed on the other side (a lower side in FIG. 3) of the ball joint 360, may connect to the first discharge part 150 and may be modified in various ways within the technical scope in which the second discharge part 160 rotates around the ball joint 360 together with the first discharge part 150. The second discharge part 160 in one embodiment may include a second discharge core 161, a second discharge body 162 and a discharge core supporter 163.

The second discharge core 161 may be coupled to the first discharge core 152 with the core mounting part 170 between the second discharge core 161 and the first discharge core 152. The second discharge core 161 may form a groove that is concave downward, and the first supporter 180 and the second supporter 190, which encircle the ball joint 360, may be disposed inside the second discharge core 161.

The second discharge body 162 may be spaced from the second discharge core 161 and disposed in a ring shape that encircles an outside of the second discharge core 161. An outside of the second discharge body 162 may be formed into a curved surface and installed in a state of being spaced from the housing 10. Accordingly, the second discharge body 162 may be prevented from contacting the hosing 10 when the second discharge part 160 rotates.

Since the second discharge core 161 and the second discharge body 162 are connected by the plurality of discharge core supporters 163, the second discharge core 161, the second discharge body 162 and the discharge core supporter 163 may rotate together.

### [Core mounting part]

The core mounting part 170 may be disposed between the first discharge part 150 and the second discharge part 160, and may receive a manipulation signal through the first discharge part 150 or display an operation state of the portable air purifier 1 through the first discharge part 150. The core mounting part 170 in one embodiment may include a touch panel 171 disposed on a lower side of the first discharge core 152 and configured to receive a user's manipulation signal through the first discharge core 152, a display 172 disposed on a lower side of the touch panel 171, configured to provide image information toward the first discharge core 152 and including a PCB configured to receive the manipulation signal of the touch panel 171, and a fixing case 173 fixed to the first discharge part 150 while encircling the touch panel 171 and the display 172.

### [First supporter]

The first supporter 180 may connect to the discharge body part 141 or the first supporter 180 and the discharge body part 141 may be integrally formed, and the first supporter 180 may be modified in various ways within the technical scope in which the first supporter 180 is provided with a first curved surface groove 182 formed into a concave groove. The first curved surface groove 182 may be installed in a way that the first curved surface groove 182 encircles the upper side of the ball joint 360 having a sphere shape. The first supporter 180 in one embodiment may include a first support body 181 and a first wing member 183.

The first support body 181 may be disposed inside the first curved surface groove 182 formed into a concave groove and fixed to a center of the discharge body part 141. The first support body 181 in one embodiment may be coupled to a lower side of the second discharge part 160. The first support body 181 may be inserted into a lower side of the second discharge core 161 of the second discharge part 160 and fixed to an inside of the second discharge core 161.

The first wing member 183 may include a first wing member 183 extending outside the first support body 181 and facing the second supporter 190. The first wing member 183 and the second supporter 190 may be fixed as a result of fastening of a fastening member 195 and may be coupled with a gap therebetween.

The first wing member 183 may be formed into a plate that extends along a circular arc, and the first support body 181 may have a cylindrical shape that protrudes upward from a central portion of the first wing member 183, may be provided therein with the first curved surface groove 182 and may have a lower side that is open.

### [Second supporter]

The second supporter 190 may be coupled to the first supporter 180, and may be provided with a second curved surface groove 192 connected to the first curved surface groove 182 on an inner side thereof. The second curved surface groove 192 may be installed in a way that the second curved surface groove 192 encircles a lateral surface and part of a lower side of the ball joint 360 having a sphere shape.

The second supporter 190 in one embodiment may be provided with a hollow hole part 193 that communicates in the up-down direction and may include a second support body 191 installed in the circumferential direction. The second curved surface groove 192 may be formed inside the second support body 191 facing the hollow hole part 193.

An upper side of the discharge part 140 may be placed in the horizontal direction, and a position at which air having passed through the discharge part 140 is moved upward may be set to an initial position of the discharge part 140. When the discharge part 140 is at the initial position, an inner diameter of a lower end of the second curved surface grove 192 may be less than a maximum outer diameter of the ball joint 360. The second supporter 190 surrounding the lower side of the ball joint 360 is fixed to the first supporter 180 surrounding the upper side of the ball joint 360. Accordingly, it is possible to prevent the ball joint 360 from being separated to the outside of the second supporter 190.

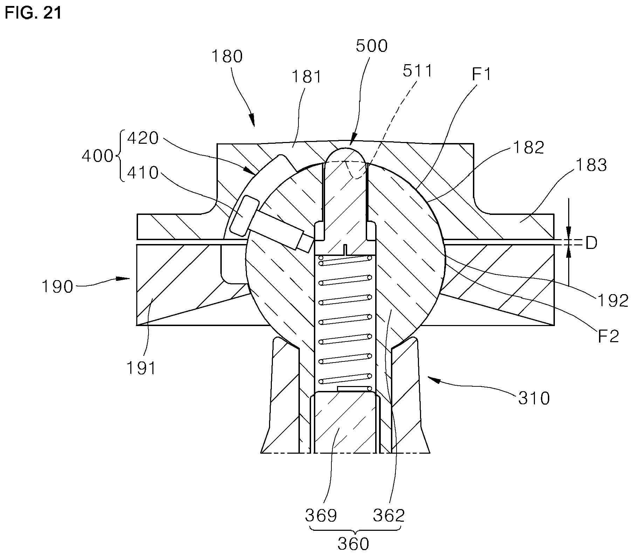

As illustrated in FIG. 21, a frictional force between the first supporter 180 and the ball joint 360 is referred to as F1, and a frictional force between the second supporter 190 and the ball joint 360 is referred to as F2. Additionally, when a distance between the first supporter 180 and the second supporter 190 is D, F1 and F2 are inversely proportional to D.

That is, the frictional force between the first supporter 180 and the ball joint 360 and the frictional force between the second supporter 190 and the ball joint 360 may be inversely proportional to the distance between the first supporter 180 and the second supporter 190 that are installed to face each other with the ball joint 360 therebetween. When D increases, F1 and F2 decrease, and when D decreases, F1 and F2 increase.

When the discharge part 140 rotates around the ball joint 360 and then does not maintain a state in which the discharge part 140 is rotated although the discharge part 140 needs to maintain the state, D may decrease as a result of adjustment of a fastening state of the fastening member 195, and accordingly, F1and F2 may increase. Additionally, when the discharge part 140 does not smoothly rotate due to the increase in F1 and F2, the fastening member 195 may be adjusted to increase D, and accordingly, F 1 and F2 may decrease.

When a direction of rotation of the discharge part 140 is adjusted manually, the discharge part 140 may rotate readily, and the discharge part 140 may be prevented from rocking after the completion of its rotation, thereby improving reliability in operation of the discharge part 140.

As illustrated in FIG. 6, the first supporter 180 may be provided with the first curved surface groove 182 that forms a groove concave downward, and the second supporter 190 may be provided with the second curved surface groove 192 that forms a groove concave along an inner circumference of the second support body 191 facing the hollow hole part 193. When the discharge part 140 is at the initial position, the upper side of the ball joint 360 may be inserted into the first curved surface groove 182, and the second curved surface groove 192 may be installed to encircle part of the lateral surface and part of a lower portion of the ball joint 360. Accordingly, the first supporter 180 and the second supporter 190 may rotate around the ball joint 360.

The second supporter 190 may be fixed to the first supporter 180 by the fastening member 195, and the first supporter 180 may be fixed to the discharge body part 141. Thus, the discharge body part 141, the first supporter 180 and the second supporter 190 may form a single module and rotate around the ball joint 360.

### [Sterilizer]

As illustrated in FIG. 2, the sterilizer 200 may be disposed between the filter part 40 and the second case 30, and may be modified in various ways within the technical scope in which the sterilizer 200 emits a light ray for sterilization to the filter part 40. The sterilizer 200 in one embodiment may include at least one of a sterilizing and supporting part 210, a supporting part 220 and an emitter 230.

### [Sterilizing and supporting part]

The sterilizing and supporting part 210 may be disposed between the first case 20 and the second case 30 and may shield the lower portion of the first case 20. The sterilizing and supporting part 210 may be disposed on a lower side of the emitter 230, and may be modified in various ways within the technical scope in which the sterilizing and supporting part 210 connects to the housing 10 and movement of the sterilizing and supporting part 210 is restricted.

Air introduced into the first case 20 through the entrance part 22 may be prevented from moving to the second case 30 by the sterilizing and supporting part 210. Accordingly, a flow rate of air moving to the fan module 70 may increase and air purification performance of the portable air purifier 1 may improve.

The supporting part 220 may be modified in various ways within the technical scope in which the supporting part 220 protrudes from a center of the sterilizing and supporting part 210 upward and supports a lower portion of the emitter 230. The supporting part 220 may be disposed at a center of the entrance part 22 in a radial direction of the entrance part and a transverse cross section of the supporting part 220 may have a circular shape to reduce friction with air.

The supporting part 220 may be formed into a pillar that protrudes from the center of the sterilizing and supporting part 210 upward. The supporting part 220 may be formed into a cylinder or a circular cone. The supporting part 220 in one embodiment may have a transverse cross section that is narrowed gradually from a lower side to an upper side and may be disposed at a center of the first case 20 provided with the entrance part 22, thereby minimizing friction with air.

A transverse cross section of the sterilizing and supporting part 210 for sterilizing the filter part 40 may have a circular shape, and air suctioned through the entrance part 22 may rotate outside the supporting part 220 while rotating in a spiral shape thanks to an inclined shape of the entrance hole 23 and may move to the upper side on which the filter part 40 is disposed. That is, the sterilizer 200 may be disposed in a central portion of the first case 20 and air suctioned through the entrance part 22 may move upward while rotating around an outer circumference of the sterilizer 200, thereby reducing flow resistance of the sterilizer 200.

Since rotation centers of the supporting part 220 and the fan member 90, and a core member 310 of a rotation supporter 300 described below are disposed on the same straight line, resistance against a flow of air moving from the lower side to the upper side may decrease, and air may flow more smoothly, thereby ensuring improvement in air purification performance of the portable air purifier 1.

The emitter 230 may be disposed on an upper side of the supporting part 220 and may emit a light ray for sterilization toward the filter part 140. The emitter 230 may be disposed on a perpendicular reference line that vertically passes through the center of the entrance part 22 in a radial direction of the entrance part. When the filter part 40 is disposed on an upper side of the emitter 230, an entire surface area of a lower end of the filter part 40 may be sterilized by a relatively small number of sterilizing light sources 232, thereby reducing costs incurred for manufacturing, maintenance and repairs.

The emitter 230 may be modified in various ways within the technical scope in which the emitter 230 is disposed at a position higher than or the same as a position of an upper end of the entrance part 22. The emitter 230 in one embodiment may include a printed circuit board 231 and a sterilizing light source 232. The printed circuit board 231 may be disposed on the upper side of the supporting part 220, and the sterilizing light source 232 for emitting a light ray for sterilization may be disposed on an upper side of the printed circuit board 231. The sterilizing light source 232 may be a UVC LED, and various types of sterilizing devices may be used within the technical scope in which the sterilizing light source 232 sterilizes germs in the filter part 40.

Since the sterilizing light source 232 of the sterilizer 200 is disposed on an upper side of the entrance part 22, the sterilizing light source 232 may be prevented from emitting out of the first case 20 through the entrance part 22.

### [Rotation supporter]

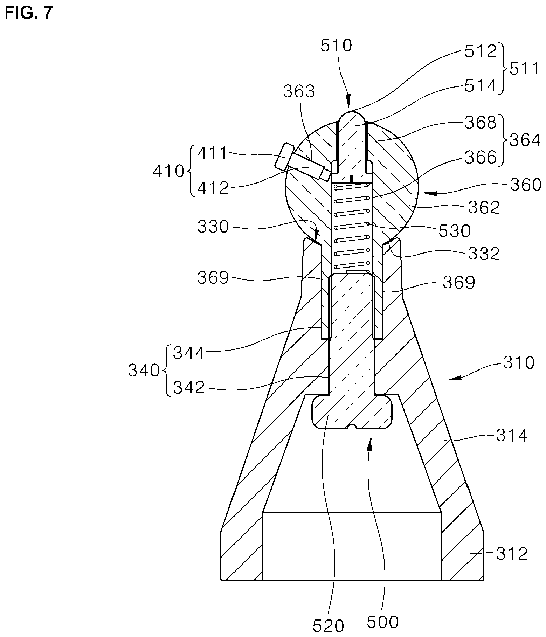

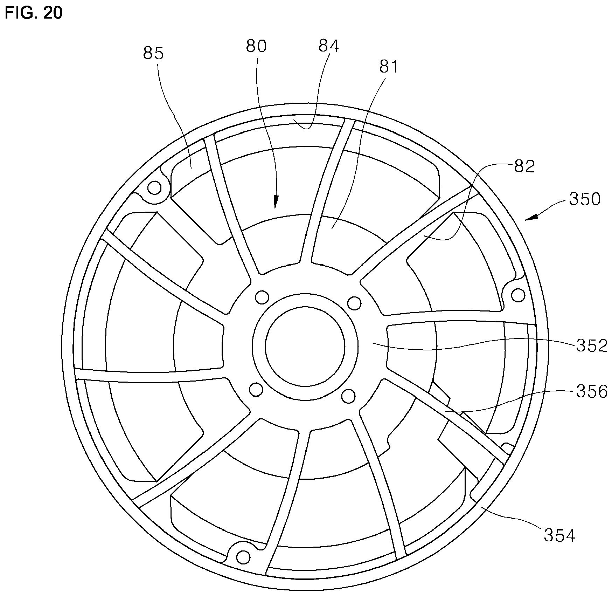

FIG. 7 is a cross-sectional view showing a rotation supporter 300 in one embodiment, FIG. 8 is a perspective view showing the discharge part 140 and the rotation supporter 300 in one embodiment, and FIG. 20 is a plan view showing a core supporter 350 in one embodiment.

As illustrated in FIGS. 6 to 8 and 20, the rotation supporter 300 may connect to the housing 10 and support the discharge part 140 disposed at the outlet 24 of the housing 10 in a rotatable manner, and movement of the rotation supporter 300 may be restricted. One side of the rotation supporter may connect to the housing 10, and the other side may be disposed at a position facing the first curved surface groove 182 and the second curved surface groove 192. The rotation supporter may support the first supporter 180 and the second supporter 190 in a rotatable manner. The rotation supporter 300 in one embodiment may include a core member 310, a core supporter 350 and a ball join 360.

### [Core member]

The core member 310 may be disposed on a lower side of the discharge part 140 configured to adjust a discharge direction of air and may extend from a center of the outlet 24 to the discharge part 140. The core member 310 may be disposed on a lower side of the second supporter 190, may extend from the center of the outlet 24 to the second supporter 190 and may support the ball joint 360. Additionally, the core member 310 may have an outside formed into a curved surface and a transverse cross section that is gradually reduced from a lower side connected to the core supporter 350 toward the ball joint 360, thereby minimizing resistance of air moving from the lower side to the upper side.

The core member 310 may be formed into a circular cone shape and may have a transverse cross section that is gradually reduce toward the upper side. The core member 310 in one embodiment may include a core base 312, a core body 314 and a core connector 320.

The core base 312 may form a lower portion of the core member 310 and may be fixed to the core supporter 350. The core base 312 may be disposed in a central portion of the housing 10 and formed into a pipe that extends in the up-down direction.

The core body 314 may extend to an upper side of the core base 312 and may be formed into a circular cone having upper and lower sides that are open.

The core connector 320 may be modified in various ways within the technical scope in which the core connector 320 forms a space for installing a position informing part 500 and a space for connecting the ball joint 360 inside the core body 314. The core connector 320 in one embodiment may include a joint seating part 330 and an inner fastening and supporting part 340.

The joint seating part 330 may form a space for coupling the core body 314 and the ball joint 360 through an upper side of the core body 314. The joint seating part 314 in one embodiment may include a curved surface supporter 332 forming a surface that is concavely curved to allow an outside of the ball joint 360 to be seated on the upper side of the core body 314 facing the ball joint 360, and a joint connecting hole 334 forming a hole for allowing the ball joint 360 to be disposed at an upper end of the core body 314.

The inner fastening and supporting part 340 may extend to an inside of the core body 314, and may be modified in various ways within the technical scope in which the inner fastening and supporting part 340 supports the ball joint 360 and a first adjusting bolt 520 of the position informing part 500. The inner fastening and supporting part 340 in one embodiment may includes a first fastening and supporting part 342 that extends to the inside of the core body 314 and forms a hole through which a body of the first adjusting bolt 520 passes, and a second fastening and supporting part 344 that is disposed on an upper side of the first fastening and supporting part 342 and encircles an outside of a mounting projection 369 extending to the lower side of the ball joint 360.

### [Core supporter]

The core supporter 350 may extend outside the core member 310 and may be fixed to the inside of the housing 10, and may be modified in various ways within the technical scope in which movement of the core supporter 350 is restricted together with movement of the core member 310. The core supporter 350 in one embodiment may include a first core supporter 352, a second core supporter 354 and a connecting part 356.

The first core supporter 352 may be coupled to the lower portion of the core member 310 and may be installed in a ring shape. The core base 312 may be coupled to an inside of the first core supporter 352, and the second core supporter 354 having a ring shape is installed outside the first core supporter 354. Movement of the second core supporter 354 may be restricted using various fixing methods such as a method by which the second core supporter 354 is fixed to the housing 10 based on fitting or using a bolt and the like.

The first core supporter 352 and the second core supporter 354 may be connected by the connecting part 356. The connecting part 356 may be installed spirally or radially with respect to the first core supporter 352. Since the first core supporter 352 in one embodiment is installed spirally along a direction of winds discharged from the fan module 70, frictional resistance between the connecting part 356 and air may decrease.

### [Ball joint]

The ball joint 360 may be coupled to the core member 310, and may be modified in various ways within the technical scope in which the ball joint 360 supports the discharge part 140 in a rotatable manner. A lower side of the ball joint 360 may be coupled to the core member 310, and movement of the ball joint 360 may be restricted. An upper side of the ball joint 360 may be inserted into the discharge part 140 and may support the discharge part 140 in a rotatable manner. The upper side of the ball joint 360 in one embodiment may be disposed inside the first curved surface groove 182 and the second curved surface groove 192 and may support the first supporter 180 and the second supporter 190 in a rotatable manner.

The ball joint 360 may be formed into a sphere disposed inside a sphere-shaped groove formed by the first curved surface groove 182 and the second curved surface groove 192. An outer diameter of the ball joint 360 may be greater than the inner diameter of the lower end of the second curved surface groove 192. Accordingly, the ball joint 360 may be prevented from escaping out of the second supporter 190.

An end of the ball joint 360 may have a sphere shape, may be disposed inside the discharge part 140 and may support the discharge part 140 in a rotatable manner. The upper side of the ball joint 360 may have a sphere shape, and a mounting projection 369 formed into a bar extending from the sphere-shaped upper side to the lower side may be inserted into and fixed to the core member 310 through a joint connecting hole 334 disposed on an upper side of the core member 310. The ball joint 360 and the core member 310 may be fixed using various fixing methods such as a screw coupling, a pin coupling or using an adhesive and the like.

The ball joint 360 in one embodiment may include a joint body 362 and a mounting projection 369. The joint body 362 may be formed into a sphere and may be provided therein with a first mounting hole 363 and a second mounting hole 364. The first mounting hole 363 may form a groove for fastening the guide projection 410 of the rotation guide 400 outside the joint body 362.

The second mounting hole 364 spaced from the first mounting hole 363 may forma hole that passes through the joint body 362 in the up-down direction. The second mounting hole 364 may be disposed at a center of the joint body 362 and may form a hole for installing an informing projection 510 of the position informing part 500. The second mounting hole 364 in one embodiment may include a small diameter hole 368 that forms a hole extending from an upper end of the ball joint 360 to an inside of the ball joint 360, and a large diameter hole 366 that communicates with a lower side of the small diameter hole 368 and forms a hole downward. An inner diameter of the large diameter hole 366 may be greater than an inner diameter of the small diameter hole 368. Accordingly, a moving head 512 of a moving projection 511 of the position informing part 500 may be disposed inside the large diameter hole 366, and the moving head 512 of the moving projection 511 my protrude from the ball joint 360 upward through the small diameter hole 368.

The mounting projection 369 may be formed into a pipe that extends to a lower side of the joint body 362 and may be provided therein with an inner elastic member 530 of the position informing part 500. The mounting projection 369 may be inserted into the core member 310 through the joint connecting hole 334 and disposed inside the second fastening and supporting part 344. The mounting projection 369 may be disposed inside the second fastening and supporting part 344 simply in a state of being inserted into the second fastening and supporting part, and since the mounting projection 369 is provided therein with a screw thread, the first adjusting bolt 520 may be fastened to an inside of the mounting projection 369.

Alternatively, an outside of the mounting projection 369 and an inside of the second fastening and supporting part 344 may have a screw thread such that the mounting projection 369 is fastened to the second fastening and supporting part 344.

### [Rotation guide]

The rotation guide 400 may be respectively installed in the discharge part 140 and the rotation supporter 300, and may be modified in various ways within the technical scope in which the rotation guide 400 guides rotation of the discharge part 140 such that the discharge part 140 rotates at predetermined angles. The rotation guide 400 in one embodiment may include a guide projection 410 and a guide groove 420.

The guide projection 410 may connect to the ball joint 360 or the guide projection 410 and the ball joint 360 may be integrally formed. The guide projection 410 may be formed into a projection that protrudes outside the ball joint 360. The guide projection 410 in one embodiment may be formed into a bolt and may include a held head 411 held outside the ball joint 360 and a fastened body 412 extending from the held head 411 and fastened to the inside of the ball joint 360. The fastened body 412 may be fastened to the first mounting hole 363.

The guide groove 420 may be modified in various ways within the technical scope in which the guide groove 420 is provided with a concave groove inside the discharge part 140 facing the guide projection 410. The guide groove 420 in one embodiment may be installed in at least one of the first supporter 180 and the second supporter 190 facing the ball joint 360. Alternatively, the guide groove 420 may be formed respectively in the first supporter 180 and the second supporter 190. A first groove 421 may be formed inside the first supporter 180 disposed on a path in which the guide projection 410 moves, and a second groove 422 may be formed inside the second supporter 190.

When a predetermined rotation angle of the discharge part 140 is 30 degrees, an angle between one end and the other end of the guide groove 420 may be 30 degrees with respect to the center of the joint body 362. If the rotation angle of the discharge part 140 changes, the angle between one end and the other end of the guide groove 420 may also change with respect to the center of the joint body 362. Accordingly, the guide projection 410 may be inserted into the guide groove 420 and may be held in the guide groove 420 such that rotation of the discharge part 140 at the predetermined rotation angle or greater is restricted.

### [Position informing part]

The position informing part 500 may be modified in various ways within the technical scope in which the position informing part 500 is held in the discharge part 140 and provides a sense of manipulation when the discharge part 140 is at a predetermined position. The predetermined position of the discharge part 140 may be set to an initial position where air having passed through the discharge part 140 is discharged upward, but not limited. The predetermined position of the discharge part 140 may be set to various rotation positions of the discharge part 140.

The position informing part 500 in one embodiment may include an informing projection 510 and an informing groove 540.

The informing projection 510 may be provided with a moving projection 511 that is pressed by an elastic force toward the outside of the ball joint 360, and may be modified in various ways within the technical scope in which the moving projection 511 protrudes outside the ball joint 360 when the discharge part 140 is at the predetermined position. The informing projection 510 in one embodiment may include a moving projection 511, a first adjusting bolt 520 and an inner elastic member 530.

The moving projection 511 may move along the second mounting hole 364 of the joint body 362 in the up-down direction. The moving projection 511 in one embodiment may be formed into a bolt and may include a moving head 512 and a moving body 514. The moving head 512 may be disposed inside the large diameter hole 366, and an upward movement of the moving head 512 may be restricted since the moving head is held by a step disposed between the large diameter hole 366 and the small diameter hole 368. A convexly curved surface may be formed at an upper end of the moving body 514 that extends from the moving head 512 upward.

The first adjusting bolt 520 may be fastened to the first fastening and supporting part 342 of the core member 310. The first adjusting bolt 520 may be fastened to the large diameter hole 366 disposed inside the joint body 362. Alternatively, the first adjusting bolt 520 may not be fastened to an inside of the first fastening and supporting part 342 while being fastened to the screw thread included inside the large diameter hole 366.

A lower side of the inner elastic member 530 may be supported by the first adjusting bolt 520 and an upper side may support the moving projection 511. A coil spring may be used as the inner elastic member 530 in one embodiment, and the moving projection 511 may be pressed by elasticity.

The informing groove 540 may be modified in various ways within the technical scope in which the informing groove forms a groove into which the moving projection 511 is inserted and held, in the discharge part 140 facing the informing projection 510. The informing groove 540 in one embodiment may be formed in the first supporter 180. The informing groove 540 having a concave shape may be formed on a lower side of the first support body 181, and when the discharge part 140 is at the initial position, the informing groove 540 may be at a position facing the moving projection 511. Accordingly, the moving projection 511 may be inserted into the informing groove 540 and may provide a sense of manipulation to a user.

### [Air flow of portable air purifier]

The entrance part 22 for suctioning external air may be disposed along the outer circumference of the first case 20. Accordingly, external air outside the first case 20 may move into the first case 20 through the entrance part 22 and a flow rate of suctioned air may increase.

As a result of operation of the fan module 70, air outside the portable air purifier 1 may be suctioned into the portable air purifier 1. In this case, the air outside the portable air purifier 1 may form an air flow rotating along an outer circumference of the sterilizing and supporting part 210 in a spiral shape while passing through the entrance hole 23 inclined.

The air, which is suctioned into the first case 20 and moves upward while rotating in a spiral shape, may pass through the filter part 40, and in this process, physical particles such as dust/fine dust/ultra fine dust and the like, chemical substances such as odorant particles/harmful gases and the like and microorganisms such as germs/viruses and the like, which are included in the air, may be filtered.

Since the filter part 40 and the fan module 70 are disposed on the same straight line in the up-down direction, flow loss may be minimized and air may be suctioned and filtered effectively.

The air having passed through the filter part 40, i.e., the purified air, may be introduced into the fan module 70. A flow of the air may be guided by the bell mouth 132, and accordingly, the air may be introduced into the fan module 70 effectively and smoothly.

The air introduced into the fan module 70 may be discharged from an upper side of the fan module 70. The air discharged from the upper side of the fan module 70 may be discharged in a mixed flow direction. The mixed flow direction may be defined as an upward diagonal direction.

The air introduced into a central portion on a lower side of the fan module 70 may move upward through a discharge opening that is provided along an inside of an edge of the fan module 70 in a ring shape. That is, the air introduced into a lower portion of the fan module 70 may be discharged in the upward diagonal direction such that a passage for movement of air and a direction of a flow path of air of the rotation supporter 300 are matched, since a mixed flow fan is applied to the fan module 70, thereby reducing flow loss.

The air discharged from the upper side of the fan module 70, i.e., the purified air, may be introduced into the discharge part 140 from the lower side thereof and may be discharged from the upper side of the discharge part 140.

The discharge part 140 may rotate within a range of predetermined angles. Accordingly, a direction of the discharged air may be adjusted depending on an angle at which the discharge part 140 is installed.

Additionally, an inside of the discharge part 140 may form a concave groove. Accordingly, an increase in the discharge resistance of air, a direction of which is changed by the discharge part 140, may be suppressed. Further, since the filter part 140, the fan module 70 and the discharge part 140 are disposed on the same straight line in the up-down direction, flow loss of air may be minimized, air may be suctioned effectively, and filtered and purified air may be discharged effectively.

### [Rotation of discharge part]

Since the sphere-shaped ball joint 360 is disposed inside the first supporter 180 and the second supporter 190 of the discharge part 140, the discharge part 140 may rotate around the ball joint 360. The discharge part 140 may be rotatably installed in the ball joint 360 included in the rotation supporter 300. Thus, the discharge part 140 may be installed in a way that the discharge part 140 rotates around the ball joint 360 such that a discharge direction of air is readily adjusted.

When a rotation angle of the discharge part 140 serving as a circulator is 0 degrees, the upper side of the discharge part 140 needs to be installed in the horizontal direction, and the informing groove 540 formed in the first supporter 180 of the discharge part 140 may face the informing projection 510. Accordingly, the moving projection 511 pressed by the inner elastic member 530 may be held in the informing groove 540, and the user may readily ascertain that the discharge part 140 is placed at the right position that is an initial position.

The core mounting part 170 serving as a touch panel may be installed in a central portion of the discharge part 140, and an electric wire 600 connected to the core mounting part 170 may connect to a lower side of the housing 10. Accordingly, when a panel makes a 360 degree rotation without additional restrictions on the rotation of the panel, the electric wire may be broken or damaged. To prevent this from happening, the rotation guide 400 may be installed to adjust the rotation angle of the discharge part 140 within predetermined angles, thereby preventing damage to the electric wire 600.

That is, the discharge part 140 may rotate within the predetermined angles, thereby preventing the electric wire 600 connected to the discharge part 140 from being broken or damaged, since the guide projection 410 protruding outside the ball joint 360 is held in the guide groove 420 formed inside the discharge part 140.

When the discharge part 140 rotates at the predetermined angle or greater, the guide projection 410 protruding outside the ball joint 360 may bump against the first supporter 180 and the second supporter 190 disposed at a boundary of the guide groove 420. Thus, the discharge part 140 may rotate with the predetermined angles.

Further, since a spring force of the inner elastic member 530 is adjusted by adjusting the position at which the first adjustment bolt 520 is fastened to the mounting protrusion 369, the force of the inner elastic member 530 to press the moving projection 511 is also adjusted.

The embodiments are described above with reference to a number of illustrative embodiments thereof. However, the present invention is not intended to limit the embodiments and drawings set forth herein, and numerous other modifications and embodiments can be devised by one skilled in the art without departing from the scope of the invention as defined in the claims.

**Description of reference numerals**

| | | | |
|---|---|---|---|
| 1: | Portable air purifier | 121: | Entrance projection |
| 10: | Housing | 130, 430: | Fan base |
| 20: | First case | 131, 431: | Base plate |
| 21: | Accommodation space | 132, 432: | Bell mouth |
| 22: | Entrance part | 133: | Protruding rib |
| 23: | Entrance hole | 134, 434: | Coupling projection |
| 24: | Outlet | 140: | Discharge part |
| 30: | Second case | 141: | Discharge body part |
| 40: | Filter part | 150: | First discharge part |
| 70, 370: | Fan module | 152: | First discharge core |
| 80, 380: | Fan housing | 154: | First discharge body |
| 81, 381: | Support plate | 156: | Vane |
| 82, 382: | Connecting and supporting part | 160: | Second discharge part |
| 83, 383: | Wire guide | 161: | Second discharge core |
| 84, 384: | Lateral surface supporter | 162: | Second discharge body |
| 85, 385: | Inner guide | 163: | Discharge core supporter |
| 86, 386: | Protruding boss | 170: | Core mounting part |
| 90: | Fan member | 171: | Touch panel |
| 100: | Hub | 172: | Display |
| 101: | Hub plate | 173: | Fixing case |
| 102: | Shaft coupler | 180: | First supporter |
| 103: | First reinforcing projection | 181: | First support body |
| 105: | Inner protrusion | 182: | First curved surface groove |
| 106: | Second reinforcing projection | 183: | First wing member |
| 107: | Skirt part | 190: | Second supporter |
| 110: | Fan wing | 191: | Second support body |
| 111: | First end part | 192: | Second curved surface groove |
| 112: | Second end part | 193: | Hollow hole part |
| 113: | First edge | 195: | Fastening member |
| 114: | Second edge | 200: | Sterilizer |
| 120: | Shroud | 210: | Sterilizing and supporting part |
| 211: | Support base | 354: | Second core supporter |
| 212: | Fixing edge | 356: | Connecting part |
| 220: | Supporting part | 360: | Ball joint |
| 221: | Supporting pillar | 362: | Joint body |
| 222: | Supporting plate | 363: | Fir mounting hole |
| 230: | Emitter | 364: | Second mounting hole |
| 231: | Printed circuit board | 366: | Large diameter hole |
| 232: | Sterilizing light source | 368: | Small diameter hole |
| 240: | Battery | 369: | Mounting projection |
| 300: | Rotation supporter | 400: | Rotation guide |
| 310: | Core member | 410: | Guide projection |
| 312: | Core base | 411: | Held head |
| 314: | Core body | 412: | Fastened body |
| 320: | Core connector | 420: | Guide groove |
| 330: | Joint mounting part | 421: | First groove |
| 332: | Curved surface supporter | 422: | Second groove |
| 334: | Joint connecting hole | 500: | Position informing part |
| 340: | Inner fastening and supporting part | 510: | Informing projection |
| 342: | First fastening and supporting part | 511: | Moving projection |
| 344: | Second fastening and supporting part | 512: | Moving head |
| 350: | Core supporter | 514: | Moving body |
| 352: | First core supporter | 520: | First adjusting bolt |
| | | 530: | Inner elastic member |
| | | 540: | Informing groove |
| | | 600: | Electric wire |

## Claims

1. A portable air purifier (1), comprising:
a housing (10) provided with an entrance part (22) configured to suction air, provided therein with a filter part (40) and a fan module (70, 370), and forming an air flow path in an up-down direction;
a discharge part (140) disposed at an outlet (24) of the housing (10) and configured to guide a discharge direction of air;
a rotation supporter (300) which is connected to the housing (10), movement of which is restricted and which supports the discharge part (140) in a rotatable manner; and
a rotation guide (400) disposed respectively at the discharge part (140) and the rotation supporter (300) and configured to guide rotation of the discharge part (140) to allow the discharge part (140) to rotate within predetermined angles,
wherein the rotation supporter (300) comprises:
a core member (310) disposed on a lower side of the discharge part (140) and extended from a center of the outlet (24) to the discharge part (140);
a core supporter (350) which is extended outside the core member (310), which is fixed to an inside of the housing (10) and movement of which is restricted together with movement of the core member (310); and
a ball joint (360), a lower side of which is coupled to the core member (310) and movement of which is restricted, and an upper side of which is inserted into the discharge part (140) and supports the discharge part (140) in a rotatable manner, and
**characterized in that** the rotation guide (400) comprises:
a guide projection (410) connected to the ball joint (360) or integrated with the ball joint (360), and protruding outside the ball joint (360);
a guide groove (420) forming a concave groove inside the discharge part (140) facing the guide projection (410); and
wherein the guide projection (410) is inserted into the guide groove (420), and a rotation of the discharge part (140) at a predetermined angle or greater is restricted since the guide projection (410) is held inside the guide groove (420).

2. The portable air purifier of claim 1, wherein the core member (310) has an outside that is a curved surface, and has a transverse cross section that is gradually reduced from a lower side connected to the core supporter (350) toward the ball joint (360).

3. The portable air purifier of claim 1 or 2, wherein the core member (310) has a circular cone shape and has a transverse cross section that is gradually reduced further toward an upper side.

4. The portable air purifier of any one of claims 1 to 3, the discharge part (140), comprising:
a discharge body part (141) disposed at the outlet (24) of the housing and (10) configured to guide a discharge direction of air;
a first supporter (180) connected to the discharge body part (141) or integrated with the discharge body part (141), and provided with a first curved surface groove (182) formed into a concave groove; and
a second supporter (190) coupled to the first supporter (180) and provided therein with a second curved surface groove (192) connected to the first curved surface groove (182);
wherein the ball joint (360) is disposed in an inner space formed by the first curved surface groove (182) and the second curved surface groove (192), and supports the first supporter (180) and the second supporter (190) in a rotatable manner.

5. The portable air purifier of claim 4, wherein the guide groove (420) is disposed at at least one of the first supporter (180) and the second supporter (190) facing the ball joint (360).

6. The portable air purifier of any one of claims 2 to 5, further comprising: a position informing part (500) held in the discharge part (140) and providing a sense of manipulation when the discharge part (140) is at a predetermined position;
wherein the position informing part (500), comprises:
an informing projection (510) provided with a moving projection (511) that is pressed against an outside of the ball joint (360) by an elastic force, wherein when the discharge part (140) is at a predetermined position, the moving projection (511) protrudes outside the ball joint (360); and
an informing groove (540) forming a groove into which the moving projection (511) is inserted and held, inside the discharge part (140) facing the informing projection (510).

7. The portable air purifier of claim 6, the informing projection (510), comprising:
a first adjusting bolt (520) fastened to a lower side of a mounting hole (363, 364) disposed at the ball joint (360); and
an inner elastic member (530), a lower side of which is supported by the first adjusting bolt (520), an upper side of which supports the moving projection (511) and which presses the moving projection (511) using an elastic force.

8. A portable air purifier (1), comprising:
a housing (10) provided with an entrance part (22) configured to suction air, provided therein with a filter part (40) and a fan module (70, 370), and forming an air flow path in an up-down direction;
a discharge body part (141) disposed at an outlet (24) of the housing (10) and configured to guide a discharge direction of air;
a first supporter (180) connected to the discharge body part (141) or integrated with the discharge body part (141), and provided with a first curved surface groove (182) formed into a concave grove; and
a second supporter (190) coupled to the first supporter (180) and provided therein with a second curved surface groove (192) connected to the first curved surface groove (182); and
a rotation supporter (300), one side of which connects to the housing (10), the other side of which is disposed at a position facing the first curved surface groove (182) and the second curved surface groove (192) and which supports the first supporter (180) and the second supporter (190) in a rotatable manner,
**characterized in that** the first supporter (180) comprises:
a first support body (181) provided therein with the first curved surface groove (182) formed into a concave groove and fixed to a center of the discharge body part (140); and
a first wing member (183) extending outside the first support body (181) and facing the second supporter (190);
wherein the first wing member (183) and the second supporter (190) are fixed as a result of fastening of a fastening member (195).

9. The portable air purifier of claim 8, the rotation supporter (300), comprising:
a core member (310) disposed on a lower side of the second supporter (190) and extended from a center to the outlet (24) to the second supporter (190);
a core supporter (350) which is extended outside the core member (310), which is fixed to an inside of the housing (10) and movement of which is restricted together with movement of the core member (310); and
a ball joint (360), a lower side of which is coupled to the core member (310) and movement of which is restricted and an upper side of which is disposed inside the first curved surface groove (182) and the second curved surface groove (192), and which supports the first supporter (180) and the second supporter (190) in a rotatable manner.

10. The portable air purifier of claim 8 or 9, the second supporter (190), comprising:
a second support body (191) provided with a hollow hole part (193) communicating in an up-down direction and installed in a circumferential direction; and
wherein the second support body (191) facing the hollow hole part (193) is provided therein with the second curved surface groove (192).

11. The portable air purifier of claim 8 to 10, wherein the rotation supporter (300) comprises a sphere-shaped ball joint (360) formed disposed inside a sphere-shaped groove formed by the first curved surface groove (182) and the second curved surface groove (192), and
an outer diameter of the ball joint (360) is greater than an inner diameter of a lower end of the second curved surface groove (192) to prevent the ball joint (360) from escaping out of the second supporter (190).

## Patentansprüche

1. Tragbarer Luftreiniger (1), aufweisend:
ein Gehäuse (10), das mit einem Eintrittsteil (22) versehen ist, das zum Ansaugen von Luft konfiguriert ist, das darin mit einem Filterteil (40) und einem Gebläsemodul (70, 370) versehen ist, und einen Luftströmungsweg in einer Auf-Ab-Richtung bildet;
ein Austrittsteil (140), das an einem Auslass (24) des Gehäuses (10) angeordnet ist und konfiguriert ist, eine Austrittsrichtung der Luft zu führen;
eine Rotationsabstützung (300), die mit dem Gehäuse verbunden ist (10), deren Bewegung eingeschränkt ist und die das Austrittsteil (140) auf drehbare Weise abstützt; und
eine Rotationsführung (400), die jeweils an dem Austrittsteil (140) und der Rotationsabstützung (300) angeordnet ist und konfiguriert ist, die Rotation des Austrittsteils (140) zu führen, um dem Austrittsteil (140) zu erlauben, innerhalb vorherbestimmter Winkel zu rotieren,
wobei die Rotationsabstützung (300) aufweist:
ein Kernelement (310), das auf einer unteren Seite des Austrittsteils (140) angeordnet ist und sich von einer Mitte des Auslasses (24) zu dem Austrittsteil (140) erstreckt;
eine Kernabstützung (350), die sich außerhalb des Kernelements (310) erstreckt, die an einer Innenseite des Gehäuses (10) befestigt ist und deren Bewegung zusammen mit der Bewegung des Kernelements (310) eingeschränkt ist; und
ein Kugelgelenk (360), von dem eine untere Seite mit dem Kernelement (310) gekoppelt ist und dessen Bewegung eingeschränkt ist, und von dem eine obere Seite in das Austrittsteil (140) eingeführt ist und das Austrittsteil (140) auf drehbare Weise abstützt, und
**dadurch gekennzeichnet, dass**
die Rotationsführung (400) aufweist:
einen Führungsvorsprung (410), der mit dem Kugelgelenk (360) verbunden oder in das Kugelgelenk (360) integriert ist und außerhalb des Kugelgelenks (360) vorsteht;
eine Führungsnut (420), die eine konkave Nut innerhalb des Austrittsteils (140) formt, dem Führungsvorsprung (410) zugewandt; und
wobei der Führungsvorsprung (410) in die Führungsnut (420) eingeführt ist und eine Rotation des Austrittsteils (140) über einen vorherbestimmten Winkel oder größer eingeschränkt ist, da der Führungsvorsprung (410) innerhalb der Führungsnut (420) gehalten wird.

2. Tragbarer Luftreiniger nach Anspruch 1, wobei das Kernelement (310) eine Außenseite aufweist, die eine gekrümmte Oberfläche ist, und einen transversalen Querschnitt aufweist, der sich von einer unteren Seite, die mit der Kernabstützung (350) verbunden ist, zu dem Kugelgelenk (360) hin graduell verringert.

3. Tragbarer Luftreiniger nach Anspruch 1 oder 2, wobei das Kernelement (310) eine kreisförmige Kegelform aufweist und einen transversalen Querschnitt aufweist, der sich zu einer oberen Seite hin weiter graduell verringert.

4. Tragbarer Luftreiniger nach einem der Ansprüche 1 bis 3, wobei das Austrittsteil (140) aufweist:
ein Austrittskörperteil (141), das an dem Auslass (24) des Gehäuses (10) angeordnet ist und konfiguriert ist, eine Austrittsrichtung der Luft zu führen;
eine erste Abstützung (180), die mit dem Austrittskörperteil (141) verbunden oder in das Austrittskörperteil (141) integriert ist, und mit einer ersten gekrümmten Oberflächennut (182), die zu einer konkaven Nut gebildet ist, versehen ist; and
eine zweite Abstützung (190), die mit der ersten Abstützung (180) gekoppelt ist und darin mit einer zweiten gekrümmten Oberflächennut (192), die mit der ersten gekrümmten Oberflächennut (182) verbunden ist, versehen ist;
wobei das Kugelgelenk (360) in einem inneren Raum, der von der ersten gekrümmten Oberflächennut (182) und der zweiten gekrümmten Oberflächennut (192) gebildet wird, angeordnet ist und die erste Abstützung (180) und die zweite Abstützung (190) auf drehbare Weise abstützt.

5. Tragbarer Luftreiniger nach Anspruch 4, wobei die Führungsnut (420) an der ersten Abstützung (180) und/oder der zweiten Abstützung (190) angeordnet ist und dem Kugelgelenk (360) zugewandt ist.

6. Tragbarer Luftreiniger nach einem der Ansprüche 2 bis 5, ferner aufweisend:
ein positionsinformierendes Teil (500), das in dem Austrittsteil (140) gehalten wird und eine Manipulationsrichtung bereitstellt, wenn das Austrittsteil (140) in einer vorherbestimmten Position ist;
wobei das positionsinformierende Teil (500) aufweist:
einen informierenden Vorsprung (510), der mit einem bewegbaren Vorsprung (511) versehen ist, der durch eine elastische Kraft gegen eine Außenseite des Kugelgelenks (360) gedrückt wird, wobei, wenn das Austrittsteil (140) in einer vorherbestimmten Position ist, der bewegbare Vorsprung (511) nach außerhalb des Kugelgelenks (360) vorsteht; und
eine informierende Nut (540), die eine Nut, in die der bewegbare Vorsprung (511) eingeführt und gehalten wird, innerhalb des Austrittsteils (140) bildet und dem informierenden Vorsprung (510) zugewandt ist.

7. Tragbarer Luftreiniger nach Anspruch 6, wobei der informierende Vorsprung (510) aufweist:
eine erste Justierschraube (520), die an einer unteren Seite eines Montagelochs (363, 364), das an dem Kugelgelenk (360) eingeordnet ist, befestigt ist; und
ein inneres elastisches Element (530), von dem eine untere Seite von der ersten Justierschraube (520) abgestützt wird, von dem eine Oberseite den bewegbaren Vorsprung (511) abstützt und das den bewegbaren Vorsprung (511) unter Verwendung einer elastischen Kraft drückt.

8. Tragbarer Luftreiniger (1), aufweisend:
ein Gehäuse (10), das mit einem Eintrittsteil (22) versehen ist, das zum Ansaugen von Luft konfiguriert ist, das darin mit einem Filterteil (40) und einem Gebläsemodul (70, 370) versehen ist, und einen Luftströmungsweg in einer Auf-Ab-Richtung bildet;
einen Austrittsteilkörper (141), der an einem Auslass (24) des Gehäuses (10) angeordnet ist und konfiguriert ist, eine Austrittsrichtung der Luft zu führen;
eine erste Abstützung (180), die mit dem Austrittskörperteil (141) verbunden oder in das Austrittskörperteil (141) integriert ist und mit einer ersten gekrümmten Oberflächennut (182), die zu einer konkaven Nut gebildet ist, versehen ist; und
eine zweite Abstützung (190), die mit der ersten Abstützung (180) gekoppelt ist und darin mit einer zweiten gekrümmten Oberflächennut (192), die mit der ersten gekrümmten Oberflächennut (182) verbunden ist, versehen ist; und
eine Rotationsabstützung (300), von der eine Seite mit dem Gehäuse (10) verbunden ist, von der die andere Seite an einer der ersten gekrümmten Oberflächennut (182) und der zweiten gekrümmten Oberflächennut (192) zugewandten Position angeordnet ist und die die erste Abstützung (180) und die zweite Abstützung (190) auf drehbare Weise abstützt,
**dadurch gekennzeichnet, dass**
die erste Abstützung (180) aufweist:
einen ersten Abstützungskörper (181), der darin mit der ersten gekrümmten Oberflächennut (182), die zu einer konkaven Nut gebildet ist, versehen ist und an einer Mitte des Austrittskörperteils (140) befestigt ist; und
ein erstes Flügelelement (183), das sich außerhalb des ersten Abstützungskörpers (181) erstreckt und der zweiten Abstützung (190) zugewandt ist;
wobei das erste Flügelelement (183) und die zweite Abstützung (190) als Resultat einer Befestigung eines Befestigungselements (195) befestigt sind.

9. Tragbarer Luftreiniger nach Anspruch 8, wobei die Rotationsabstützung (300) aufweist:
ein Kernelement (310), das auf einer unteren Seite der zweiten Abstützung (190) angeordnet ist und sich von einer Mitte zu dem Auslass (24) zu der zweiten Abstützung (190) erstreckt;
eine Kernabstützung (350), die sich außerhalb des Kernelements (310) erstreckt, die an einer Innenseite des Gehäuses (10) befestigt ist und deren Bewegung zusammen mit der Bewegung des Kernelements (310) eingeschränkt ist; und
ein Kugelgelenk (360), von dem eine untere Seite mit dem Kernelement (310) gekoppelt ist und dessen Bewegung eingeschränkt ist und von dem eine obere Seite innerhalb der ersten gekrümmten Oberflächennut (182) und der zweiten gekrümmten Oberflächennut (192) angeordnet ist, und das die erste Abstützung (180) und die zweite Abstützung (190) auf drehbare Weise abstützt.

10. Tragbarer Luftreiniger nach Anspruch 8 oder 9, wobei die zweite Abstützung (190) aufweist:
einen zweiten Abstützungskörper (191), der mit einem hohlen Lochteil (193) versehen ist, das in einer Auf-Ab-Richtung kommuniziert und in einer Umfangsrichtung eingebaut ist; und
wobei der zweite Abstützungskörper (191), der dem hohlen Lochteil (193) zugewandt ist, darin mit der zweiten gekrümmten Oberflächennut (192) versehen ist.

11. Tragbarer Luftreiniger nach Anspruch 8 bis 10, wobei die Rotationsunterstützung (300) ein sphärenförmiges Kugelgelenk (360) aufweist, das innerhalb einer sphärenförmigen Nut gebildet angeordnet ist, die von der ersten gekrümmten Oberflächennut (182) und der zweiten gekrümmten Oberflächennut (192) gebildet wird, und
wobei ein äußerer Durchmesser des Kugelgelenks (360) größer als ein innerer Durchmesser eines unteren Ende der zweiten gekrümmten Oberflächennut (192) ist, um zu verhindern, dass das Kugelgelenk (360) aus der zweiten Abstützung (190) entweicht.

## Revendications

1. Purificateur d'air portable (1), comprenant :
un boîtier (10) pourvu d'une partie d'entrée (22) configurée pour aspirer de l'air, pourvu à l'intérieur d'une partie de filtre (40) et d'un module de ventilateur (70, 370), et formant un trajet d'écoulement d'air dans une direction haut-bas ;
une partie de décharge (140) disposée sur une sortie (24) du boîtier (10) et configurée pour guider une direction de décharge d'air ;
un support de rotation (300) qui est relié au boîtier (10), dont le mouvement est limité et qui supporte la partie de décharge (140) d'une manière rotative ; et
un guide de rotation (400) disposé respectivement sur la partie de décharge (140) et le support de rotation (300) et configuré pour guider la rotation de la partie de décharge (140) pour permettre à la partie de décharge (140) de tourner dans des angles prédéterminés,
dans lequel le support de rotation (300) comprend :
un élément de noyau (310) disposé sur un côté inférieur de la partie de décharge (140) et s'étendant depuis un centre de la sortie (24) jusqu'à la partie de décharge (140) ;
un support de noyau (350) qui s'étend à l'extérieur de l'élément de noyau (310), qui est fixé à un intérieur du boîtier (10) et dont le mouvement est limité conjointement avec le mouvement de l'élément de noyau (310) ; et
une articulation à rotule (360), dont un côté inférieur est couplé à l'élément de noyau (310) et dont le mouvement est limité, et dont un côté supérieur est inséré dans la partie de décharge (140) et supporte la partie de décharge (140) d'une manière rotative, et
**caractérisé en ce que**
le guide de rotation (400) comprend :
une saillie de guidage (410) reliée à l'articulation à rotule (360) ou intégrée à l'articulation à rotule (360), et faisant saillie à l'extérieur de l'articulation à rotule (360) ;
une rainure de guidage (420) formant une rainure concave à l'intérieur de la partie de décharge (140) en regard de la saillie de guidage (410) ; et
dans lequel la saillie de guidage (410) est insérée dans la rainure de guidage (420), et une rotation de la partie de décharge (140) à un angle prédéterminé ou plus est limitée dans la mesure où la saillie de guidage (410) est maintenue à l'intérieur de la rainure de guidage (420).

2. Purificateur d'air portable selon la revendication 1, dans lequel l'élément de noyau (310) présente un extérieur qui est une surface incurvée, et présente une section transversale qui est progressivement réduite depuis un côté inférieur raccordé au support de noyau (350) vers l'articulation à rotule (360).

3. Purificateur d'air portable selon la revendication 1 ou 2, dans lequel l'élément de noyau (310) présente une forme de cône circulaire et présente une section transversale qui est progressivement réduite davantage vers un côté supérieur.

4. Purificateur d'air portable selon les revendications 1 à 3, dans lequel la partie de décharge (140) comprend :
une partie de corps de décharge (141) disposée sur la sortie (24) du boîtier (10) et configurée pour guider une direction de décharge d'air ;
un premier support (180) relié à la partie de corps de décharge (141) ou intégré à la partie de corps de décharge (141), et pourvu d'une première rainure de surface incurvée (182) formée en une rainure concave ; et
un deuxième support (190) couplé au premier support (180) et pourvu à l'intérieur d'une deuxième rainure de surface incurvée (192) reliée à la première rainure de surface incurvée (182) ;
dans lequel l'articulation à rotule (360) est disposée dans un espace intérieur formé par la première rainure de surface incurvée (182) et la deuxième rainure de surface incurvée (192), et supporte le premier support (180) et le deuxième support (190) d'une manière rotative.

5. Purificateur d'air portable selon la revendication 4, dans lequel la rainure de guidage (420) est disposée sur au moins un du premier support (180) et du deuxième support (190) faisant face à l'articulation à rotule (360).

6. Purificateur d'air portable selon les revendications 2 à 5, comprenant en outre :
une partie informant de la position (500) maintenue dans la partie de décharge (140) et
fournissant un sens de manipulation lorsque la partie de décharge (140) se trouve sur une position prédéterminée ;
dans lequel la partie informant de la position (500) comprend :
une saillie d'information (510) pourvue d'une saillie mobile (511) qui est pressée contre un extérieur de l'articulation à rotule (360) par une force élastique, dans lequel lorsque la partie de décharge (140) se trouve sur une position prédéterminée, la saillie mobile (511) fait saillie à l'extérieur de l'articulation à rotule (360) ; et
une rainure d'information (540) formant une rainure dans laquelle la saillie mobile (511) est insérée et maintenue, à l'intérieur de la partie de décharge (140) en regard de la saillie d'information (510).

7. Purificateur d'air portable selon la revendication 6, la saillie d'information (510) comprenant :
un premier boulon de réglage (520) fixé à un côté inférieur d'un trou de montage (363, 364) disposé sur l'articulation à rotule (360) ; et
un élément élastique intérieur (530), dont un côté inférieur est supporté par le premier boulon de réglage (520), dont un côté supérieur supporte la saillie mobile (511) et qui presse la saillie mobile (511) en utilisant une force élastique.

8. Purificateur d'air portable (1), comprenant :
un boîtier (10) pourvu d'une partie d'entrée (22) configurée pour aspirer de l'air, pourvu à l'intérieur d'une partie de filtre (40) et d'un module de ventilateur (70, 370), et formant un trajet d'écoulement d'air dans une direction haut-bas ;
une partie de corps de décharge (141) disposée sur une sortie (24) du boîtier (10) et configurée pour guider une direction de décharge d'air ;
un premier support (180) relié à la partie de corps de décharge (141) ou intégré à la partie de corps de décharge (141), et pourvu d'une première rainure de surface incurvée (182) formée en une rainure concave ; et
un deuxième support (190) couplé au premier support (180) et pourvu à l'intérieur d'une deuxième rainure de surface incurvée (192) reliée à la première rainure de surface incurvée (182) ; et
un support de rotation (300), dont un côté est relié au boîtier (10), dont l'autre côté est disposé sur une position faisant face à la première rainure de surface incurvée (182) et à la deuxième rainure de surface incurvée (192) et qui supporte le premier support (180) et le deuxième support (190) d'une manière rotative,
**caractérisé en ce que**
le premier support (180) comprend :
un premier corps de support (181) pourvu à l'intérieur de la première rainure de surface incurvée (182) formée en une rainure concave et fixée à un centre de la partie de corps de décharge (140) ; et
un premier élément formant aile (183) s'étendant à l'extérieur du premier corps de support (181) et faisant face au deuxième support (190) ;
dans lequel le premier élément d'aile (183) et le deuxième support (190) sont fixés suite à la fixation d'un élément de fixation (195).

9. Purificateur d'air portable selon la revendication 8, le support de rotation (300) comprenant :
un élément de noyau (310) disposé sur un côté inférieur du deuxième support (190) et s'étendant depuis un centre à la sortie (24) vers le deuxième support (190) ;
un support de noyau (350) qui s'étend à l'extérieur de l'élément de noyau (310), qui est fixé à un intérieur du boîtier (10) et dont le mouvement est limité conjointement avec le mouvement de l'élément de noyau (310) ; et
une articulation à rotule (360), dont un côté inférieur est couplé à l'élément de noyau (310) et dont le mouvement est limité et dont un côté supérieur est disposé à l'intérieur de la première rainure de surface incurvée (182) et de la deuxième rainure de surface incurvée (192), et qui supporte le premier support (180) et le deuxième support (190) d'une manière rotative.

10. Purificateur d'air portable selon la revendication 8 ou 9, le deuxième support (190) comprenant :
un deuxième corps de support (191) pourvu d'une partie de trou creux (193) communiquant dans une direction haut-bas et installée dans une direction circonférentielle ; et
dans lequel le deuxième corps de support (191) faisant face à la partie de trou creux (193) est pourvu à l'intérieur de celui-ci de la deuxième rainure de surface incurvée (192).

11. Purificateur d'air portable selon la revendication 8 à 10, dans lequel le support de rotation (300) comprend une articulation à rotule en forme de sphère (360) formée et disposée à l'intérieur d'une rainure en forme de sphère formée par la première rainure de surface incurvée (182) et la deuxième rainure de surface incurvée (192), et
un diamètre extérieur de l'articulation à rotule (360) est supérieur au diamètre intérieur de l'extrémité inférieure de la deuxième rainure de surface incurvée (192) pour empêcher l'articulation à rotule (360) de s'échapper du deuxième support (190).
